(19) Europäisches Patentamt / European Patent Office / Office européen des brevets

(11) **EP 4 465 713 A1**

(12) **EUROPEAN PATENT APPLICATION**
published in accordance with Art. 153(4) EPC

(43) Date of publication:
**20.11.2024 Bulletin 2024/47**

(51) International Patent Classification (IPC):
**H04W 68/00** (2009.01)

(21) Application number: 22917945.2

(22) Date of filing: **10.01.2022**

(86) International application number:
**PCT/CN2022/071124**

(87) International publication number:
**WO 2023/130475 (13.07.2023 Gazette 2023/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **LI, Yanhua**
**Beijing 100085 (CN)**

(74) Representative: **Pfitzner, Hannes et al
Schoppe, Zimmermann, Stöckeler
Zinkler, Schenk & Partner mbB
Patentanwälte
Radlkoferstraße 2
81373 München (DE)**

(54) **INFORMATION TRANSMISSION METHOD AND APPARATUS, COMMUNICATION DEVICE,
AND STORAGE MEDIUM**

(57) The embodiments of the present disclosure relate to an information transmission method and apparatus, a communication device, and a storage medium. A base station receives first capability indication information, wherein the first capability indication information indicates whether a user equipment (UE) supports a paging early indication (PEI).

FIG. 2

**Description**

**TECHNICAL FIELD**

The present disclosure relates to but is not limited to the field of wireless communication technology, particularly to a method and an apparatus for information transmission, a communication device, and a storage medium.

**BACKGROUND**

In the related art, all user equipments (UEs) will be awakened to monitor a paging message at a paging occasion (PO). A probability that each UE is paged within the PO is different. A UE with a lower probability of being paged will be awakened together with a UE with a higher probability of being paged. A probability that the UE with a lower probability of being paged is woken up by mistake is high, which generates more false alarms and causes unnecessary power consumption/loss.

**SUMMARY**

In view of the above problem, embodiments of the present disclosure provide a method and an apparatus for information transmission, a communication device, and a storage medium.

According to a first aspect of the embodiments of the present disclosure, there is provided a method for information transmission. The method is performed by a base station, and the method includes: receiving first capability indication information, in which the first capability indication information indicates whether a user equipment (UE) supports a paging early indication (PEI).

According to a second aspect of the embodiments of the present disclosure, there is provided a method for information transmission. The method is performed by a UE, and the method includes: sending first capability indication information, in which the first capability indication information indicates whether the UE supports a PEI.

According to a third aspect of the embodiments of the present disclosure, there is provided a method for information transmission. The method is performed by a core network device, and the method includes: receiving first capability indication information, in which the first capability indication information indicates whether a UE supports a PEI.

According to a fourth aspect of the embodiments of the present disclosure, there is provided an apparatus for information transmission. The apparatus includes: a first receiving module, configured to receive first capability indication information, in which the first capability indication information indicates whether a UE supports a PEI.

According to a fifth aspect of the embodiments of the present disclosure, there is provided an apparatus for information transmission. The apparatus includes: a third sending module, configured to send first capability indication information, in which the first capability indication information indicates whether the UE supports a PEI.

According to a sixth aspect of the embodiments of the present disclosure, there is provided an apparatus for information transmission. The apparatus includes: a third receiving module, configured to receive first capability indication information, in which the first capability indication information indicates whether a UE supports a PEI.

According to a seventh aspect of the embodiments of the disclosure also provide an communication device, including: a processor, and a memory storing an executable program capable of being run by the processor which, when executed by the processor, implements steps in the method for information transmission according to the first aspect or the second aspect or the third aspect.

According to an eighth aspect of the embodiments of the disclosure also provide a storage medium having an executable program stored. When the executable program is executed by a processor, steps in the method for information transmission according to the first aspect or the second aspect or the third aspect are implemented.

According to the method and apparatus for information transmission, the communication device, and the storage medium, the base station receives first capability indication information that indicates whether the UE supports the PEI. In this way, the base station may determine a PEI capability of a UE via the capability indication information indicating whether the UE supports the PEI. This may reduce a misjudgment to the UE capability due to the uncertainty of the base station for the PEI capability of the UE, and improve a judgment accuracy of the base station for the PEI capability of the UE.

It should be understood that the foregoing general description and the following detailed description are exemplary and explanatory only, which are not limitations to the embodiments of the present disclosure.

**BRIEF DESCRIPTION OF THE DRAWINGS**

The accompanying drawings, which are incorporated in and constitute a part of this specification, illustrate embodiments consistent with the present invention and, together with the description, serve to explain the principles of the embodiments of the present invention.

FIG. 1 is a structure diagram illustrating a wireless communication system according to an exemplary embodiment.

FIG. 2 is a flowchart illustrating a method for information transmission according to an exemplary embodiment.

FIG. 3 is a flowchart illustrating another method for information transmission according to an exemplary embodiment.

FIG. 4 is a flowchart illustrating yet another method for information transmission according to an exemplary embodiment.

FIG. 5 is a flowchart illustrating yet another method for information transmission according to an exemplary embodiment.

FIG. 6 is a flowchart illustrating yet another method for information transmission according to an exemplary embodiment.

FIG. 7 is a flowchart illustrating yet another method for information transmission according to an exemplary embodiment.

FIG. 8 is a flowchart illustrating yet another method for information transmission according to an exemplary embodiment.

FIG. 9 is a flowchart illustrating yet another method for information transmission according to an exemplary embodiment.

FIG. 10 is a flowchart illustrating yet another method for information transmission according to an exemplary embodiment.

FIG. 11 is a block diagram illustrating an apparatus for information transmission according to an exemplary embodiment.

FIG. 12 is a block diagram illustrating another apparatus for information transmission according to an exemplary embodiment.

FIG. 13 is a block diagram illustrating yet another apparatus for information transmission according to an exemplary embodiment.

FIG. 14 is a block diagram illustrating a device for information transmission according to an exemplary embodiment.

## DETAILED DESCRIPTION

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the embodiments of the disclosure. Rather, they are merely examples of apparatus and methods consistent with some aspects of embodiments of the disclosure as recited in the appended claims.

The terms used in the embodiments of the present disclosure are only for the purpose of describing specific embodiments and are not intended to limit the embodiments of the present disclosure. As used in the disclosed embodiments and the appended claims, the singular forms "a/an", "said," and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, second information may also be referred to as first information. The word "if" as used herein may be interpreted as "upon" or "when" or "in response to determining..." depending on the context.

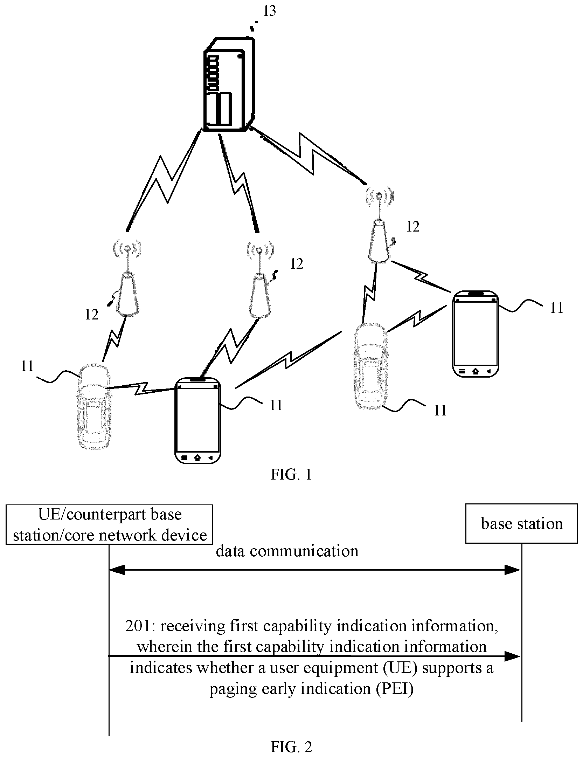

Referring to FIG. 1, it illustrates a structure diagram of a wireless communication system according to an embodiment of the present disclosure. As illustrated in FIG. 1, the wireless communication system is a communication system based on cellular mobile communication technology. The wireless communication system may include several terminals 11 and several base stations 12.

The terminal 11 may be a device that provides voice and/or data connectivity to a user. The terminal 11 may communicate with one or more core network devices via a radio access network (RAN), and the terminal 11 may be an Internet of Things terminal, such as a sensor device, a mobile phone (or called a "cellular" phone) and a computer having an IoT terminal. For example, the terminal 11 may be a fixed, portable, pocket, hand-held, built-in computer or vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may also be a device of an unmanned aerial vehicle. Alternatively, the terminal 11 may also be a vehicle-mounted device, for example, a trip computer with a wireless communication function, or a wireless communication device connected externally to the trip computer. Alternatively, the terminal 11 may also be a roadside device, for example, it may be a street lamp, a signal lamp, or other roadside devices with a wireless communication function.

The base station 12 may be a network-side device in a wireless communication system. The wireless communication system may be the 4th generation mobile communication (4G) system, also known as a long term evolution (LTE) system. Alternatively, the wireless communication system may also be a 5G system, also known as new radio (NR) system or 5G NR system. Alternatively, the wireless communication system may also be a next-generation system of the 5G. The access network in the 5G system may be called a new generation-radio access network (NG-RAN). Alternatively, the wireless communication system may be a machine type communication (MTC) system.

The base station 12 may be an evolved base station (eNB) used in the 4G system. Alternatively, the base station 12 may also be a base station (gNB) that adopts a centralized distributed architecture in a 5G system. When the base station 12 adopts the centralized distributed architecture, it usually includes a central unit (CU) and at least two distributed units (DUs). The CU is provided with protocol stacks of a packet data convergence protocol (PDCP) layer, a radio link control (RLC) protocol layer, and a medium access control (MAC) layer. The DU is provided with a protocol stack of a physical (PHY) layer. The specific implementation of the base station 12 is not limited in this embodiment of the disclosure.

A wireless connection may be established between the base station 12 and the terminal 11 through a wireless air interface. In different embodiments, the wireless air interface is a wireless air interface based on the fourth generation mobile communication network technology (4G) standard or a wireless air interface based on the fifth generation mobile communication network technology (5G) standard. For example, the wireless air interface is a new air interface. Alternatively, the wireless air interface may also be a wireless air interface based on a 5G next-generation mobile communication network technology standard.

In some embodiments, an end-to-end (E2E) connection may also be established between the terminals 11, for example, vehicle-to-vehicle (V2V) communication, vehicle to infrastructure (V2I) communication and vehicle to pedestrian (V2P) communication and other communication scenes in vehicle-to-everything (V2X) communication.

In some embodiments, the above wireless communication system may further include a network management device 13.

Several base stations 12 are respectively connected to the network management device 13. The network management device 13 may be a core network device in a wireless communication system. For example, the network management device 13 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS), etc. The implementation of the network management device 13 is not limited in this embodiment of the disclosure.

The execution body involved in the embodiments of the disclosure include, but are not limited to: a mobile phone terminal, a network-side device (such as a base station and other access network devices) and a core network device in a cellular mobile communication system.

In a case where all UEs are awakened within the PO, the UEs may be grouped for paging. The grouping information may be carried in paging downlink control information (paging DCI) or in a paging earlier indication (PEI). The UE determines whether to wake up within the PO based on the grouping information. The grouping information may be used to determine a group to which the UE belongs. For example, the grouping information may include a subgroup ID, etc.

One grouping method is to group based on UE identification information (UE_ID). The group may be determined based on the following expression:

$$wg = floor(floor(\frac{UE\_ID}{N \times N_s})/N_n)mod N_w \qquad (1),$$

where $wg$ represents an index of different paging group resources. The UE_ID modulus method is a random selection or random allocation method (randomization). That is, the modulus is taken according to the UE_ID in all paging group resources. $N$ represents a paging frame density in a time domain, $N_s$ represents a paging density within a paging frame in the time domain, $N_n$ represents a paging narrowband, and $N_w$ represents a total number of paging group resources.

Another grouping method is performed by taking the core network device as a unified node. In this method, a subgroup ID is directly assigned in NR. At this time, when the network assigns the subgroup ID, it will be assigned based on implementation such as terminal attributes, or statistical paging probability, etc.

In an example, the PEI may use 1 bit to wake up all UEs, that is, it may wake up ungrouped UEs.

Therefore, when two paging grouping methods are adopted and PEI may wake up the ungrouped UEs, how to wake up the UE based on the PEI is an urgent problem to be solved.

As illustrated in FIG. 2, the exemplary embodiment provides a method for information transmission, which may be executed by a base station in a cellular mobile communication system. The method includes the following step 201.

At 201, first capability indication information is received. The first capability indication information indicates whether a UE supports a PEI.

The PEI may be used to instruct the UE to wake up and monitor a paging message within a predetermined PO. Here, the predetermined PO may include one or more POs after the PEI. Whether the PEI is supported may include but is not limited to: whether waking up within the predetermined PO based on an indication of PEI is supported.

The PEI may be used to wake up all UEs, and may also be used to wake up UEs in a predetermined range (such as a predetermined group, a predetermined type, etc.). The PEI may include different indication information for UEs in different groups, and is used to wake up the UEs in different groups. Whether the PEI is supported may include but is not limited to: whether a PEI for waking up all UEs is supported, and/or whether a PEI for waking up UEs within a predetermined range is supported.

The capability indication information may be sent by the UE to the base station, or may be sent by the core network device to the base station, or may be sent by a counterpart base station.

The UE may carry capability indication information in an uplink signaling during a random access process or after establishing a radio resource control (RRC) connection.

After receiving the capability indication information, the base station may determine whether the UE supports the PEI. If the UE supports the PEI, the base station uses the PEI supported by the UE to wake up the UE to monitor the PO. This reduces the situation where the base station cannot determine whether the UE supports the PEI, and sends the PEI to the UE when the UE does not support the PEI, or does not send the PEI to the UE when the UE supports the PEI. Sending the PEI to the UE when the UE does not support the PEI may increase the workload of the base station. If the PEI is not sent to the UE when the UE supports the PEI, since the UE cannot receive the PEI, it needs to wake up frequently to monitor the PO, resulting in UE power consumption.

In this way, the capability indication information indicates whether the UE supports the PEI. The base station may determine the PEI capability of the UE, which reduces the misjudgment to the UE capability due to the uncertainty of the base station for the PEI capability of the UE, and improves a judgment accuracy of the base station for the PEI capability of the UE.

In an embodiment, the first capability indication information indicates at least one of: whether the UE supports a first type of PEI; or whether the UE supports a second type of PEI, in which the first type of PEI is different from the second type of PEI.

In an embodiment, the first type of PEI may have 1 bit for indicating whether to wake up the UE. In addition to serving as a paging indication, the first type of PEI can also be used for subsequent expansion to carry other information. For example, the first type of PEI carries reference signal availability indication information. Herein, a preferred embodiment of the first type of PEI is a PEI for indicating non-grouping.

In an embodiment, the second type of PEI may have a plurality of bits for indicating whether to wake up the UE.

The first type of PEI is a common PEI that may be used to wake up all UEs that need to monitor the same PO.

The second type of PEI is a PEI for a paging group that may be used to wake up all UEs monitoring the same PO within a corresponding paging group according to the paging group.

When the PEI has 1 bit, that is, the PEI is the first type of PEI, the PEI may be used to wake up all UEs that receive the PEI. That is, the first type of PEI does not distinguish the paging group of the UE.

When the PEI has a plurality of bits, that is, the PEI is the second type of PEI, each of the plurality of bits may be used to wake up one or more UEs in a paging group. That is, the second type of PEI distinguishes the paging group of the UE.

In an example, the PEI may include POnumPerPEI segments, which may be referred to as subgroupsNumPerPO field. Each of the segments may correspond to one PO. Each of the segments contains subgroupsNumPerPO bits, each of which carries a paging indication. The paging indication is used to indicate whether to perform waking up for one or more paging groups at the corresponding PO.

The PEI is a first type of PEI, and the subgroupsNumPerPO field has a 1-bit paging indication bit, which is used to wake up all UEs that receive the PEI to monitor a paging message within the PO. For example, when the paging indication bit is "1", all UEs receiving the PEI are awakened to monitor a paging message within the PO period. When the paging indication bit is "0", it instructs the UE to remain in a dormant/sleep state within the PO period, such as maintaining an RRC idle state or an RRC inactive state.

The PEI is a second type of PEI and the subgroupsNumPerPO field has a plurality of bits, each of which may correspond to a paging group. UEs in a different paging group determine whether to wake up within the PO period based on a bit corresponding to their own paging group. For example, the subgroupsNumPerPO field has two bits corresponding to two paging groups respectively. When one of the two bits is "1", a UE in a paging group corresponding to the bit is awakened to monitor the paging message within the PO. When the other of the two bits is "0", it indicates that a UE in a paging group corresponding to the bit remains in a sleep state within the PO.

The capability indication information may be used to indicate whether the UE supports the first type of PEI and/or the second type of PEI.

If the capability indication information indicates that the UE supports the first type of PEI, the base station may use the first type of PEI to wake up the UE to monitor the PO. This reduces the situation where the UE needs to wake up at each PO and reduces the power consumption of the UE.

If the capability indication information indicates that the UE supports the second type of PEI, the base station may use the second type of PEI to wake up the UE based on the paging group to monitor the PO. This reduces the situation where the UE is awaken at the PO when the paging group the UE belongs to is not paged, and thus reduces the power consumption of the UE.

In this way, the capability indication information indicates whether the UE supports the PEI. The base station may determine the PEI capability of the UE, and send the PEI supported by the UE to wake up the UE to monitor the PO based on the PEI capability of the UE. When the UE does not need to be awaken, the UE is not awaken for monitoring, which reduces the power consumption caused by frequent wake-up of the UE.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

The first type of paging grouping mode and the second type of paging grouping mode use different methods to divide paging groups. The first type of paging grouping mode and the second type of paging mode may also be executed by different network nodes. The first type of paging grouping mode and the second type of paging mode may also be executed by the same network node.

The core network device or the base station etc. may divide the paging groups by using different paging grouping modes respectively, thus generating different types of paging groups. In each paging grouping mode, a plurality of paging groups can be obtained by dividing. For example, the UEs may be grouped based on their service types, or their transmission rates, etc.

The second type of PEI at least corresponding to the first type of paging grouping mode may be used to at least indicate whether to wake up a UE in a paging group corresponding to the first type of paging grouping mode.

The second type of PEI at least corresponding to the second type of paging grouping mode may be used to at least indicate whether to wake up a UE in a paging group corresponding to the second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

The first type of paging grouping mode may be a mode in which the core network device divides paging groups based on UE attributes. Here, the UE attributes may include but are not limited to: a service type of the UE, a transmission quantity of the UE, a transmission bandwidth of the UE, etc.

The second type of paging grouping mode may be a mode in which the access network device, such as the base station, divides paging groups based on UE identification information (UE_ID). For example, the base station can use the above expression (1) to determine the paging group of the UE.

Each bit in the plurality of bits of the second type of PEI may be used to indicate whether one or more paging groups are awakened within a predetermined PO. Here, the paging groups may include: paging groups divided by the first type of paging grouping mode, or paging groups divided by the second type of paging grouping mode.

In an example, the second type of PEI may have 8 bits, where each of 4 bits indicates each one of 4 paging groups divided by the first type of paging grouping mode, and each of the other 4 bits indicates each one of the 4 paging groups divided by the second type of paging grouping mode.

The second type of PEI at least corresponding to the first type of paging grouping mode may include the second type of PEI corresponding to only the first type of paging grouping mode, or may include the second type of PEI corresponding to both the first type of paging grouping mode and the second type of paging grouping mode.

The second type of PEI at least corresponding to the second type of paging grouping mode may include the second type of PEI corresponding to only the second type of paging grouping mode, and may also include the second type of PEI corresponding to both the first type of paging grouping mode and the second type of paging grouping mode.

By the capability indication information that indicates whether the UE supports PEIs corresponding to different types of paging groups, the base station may determine the supporting capability of the UE for the PEIs corresponding to different types of paging groups, then send the PEI corresponding to a type of paging group for the UE, so as to wake up the UE to monitor the PO, which reduces the situation where the UE is awakened within the PO for other types of paging groups, and reduces the power consumption caused by the UE being awakened in an invalid PO.

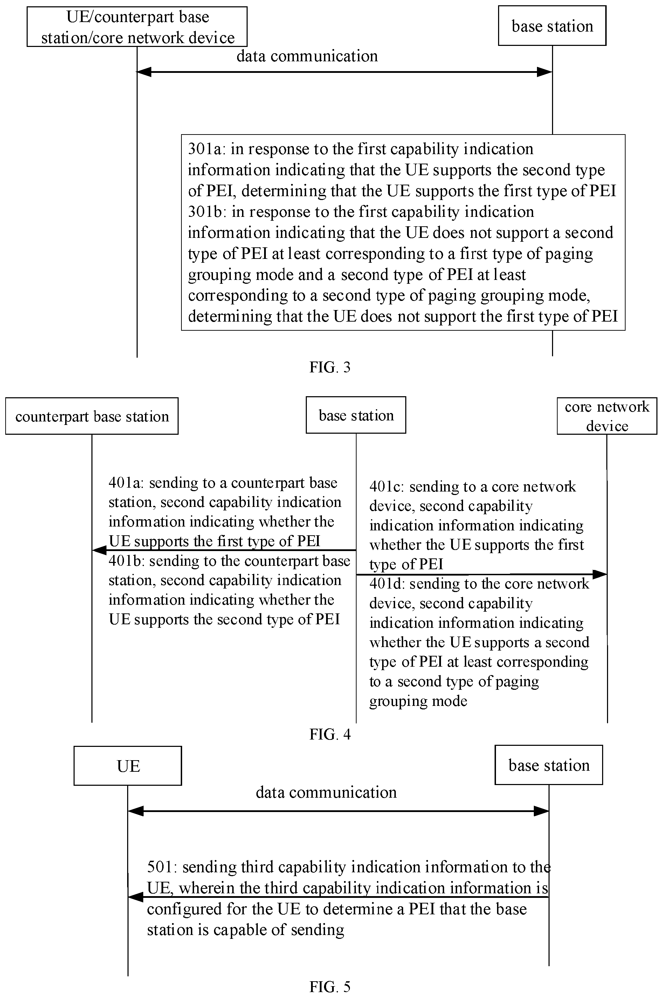

As illustrated in FIG. 3, the exemplary embodiment provides a method for information transmission. The method further includes at least one of the following steps 301a-301b.

At 301a, in response to the first capability indication information indicating that the UE supports the second type of PEI, it is determined that the UE supports the first type of PEI;

At 301b, in response to the first capability indication information indicating that the UE does not support a second type of PEI at least corresponding to a first type of paging grouping mode and a second type of PEI at least corresponding to a second type of PEI corresponding to a second type of paging grouping mode, it is determined that the UE does not support the first type of PEI.

Here, the step 301a or 301b may be implemented alone or in combination with the step 201.

The capability indication information may indicate whether the UE supports the PEI and PEIs corresponding to different paging grouping modes, etc. in an explicit indication manner. The capability indication information may also indicate whether the UE supports PEI and the PEIs corresponding to different paging grouping modes, etc., in an implicit indication manner.

In an example, when the capability indication information indicates that the UE supports the second type of PEI, the capability indication information may implicitly indicate that the UE also supports the first type of PEI. Here, the second type of PEI may include: a second type of PEI at least corresponding to the first type of paging grouping mode, and/or a second type of PEI at least corresponding to the second type of paging grouping mode.

In an example, when the capability indication information indicates that the UE does not support the second type of PEI, the capability indication information implicitly indicates that the UE also does not support the first type of PEI. Here, the second type of PEI may include: a second type of PEI at least corresponding to the first type of paging grouping mode and a second type of PEI at least corresponding to the second type of paging grouping mode.

The capability indication information in explicit indication and/or implicit indication manners may be specified in a communication protocol, or may be mutually agreed upon among the core network device, the base station and the UE.

The capability indication information in explicit indication and/or implicit indication manners may be implemented by but not limited to the following modes.

Mode 1, whether the UE supports the first type of PEI and the second type of PEI may be indicated separately.

The capability indication information may separately indicate to the base station that the UE supports the first type of PEI;

The capability indication information may separately indicate to the base station that the UE supports the second type of PEI at least corresponding to the second type of paging grouping mode;

Mode 2, whether the first type of PEI and the second type of PEI are supported is indicated by capability indication information.

The capability indication information indicates that the UE supports the second type of PEI, and implicitly indicates that the UE supports the first type of PEI.

If the UE supports the first type of PEI, it may report capability indication information indicating that the UE supports the first type of PEI and further indicating that the UE supports the second type of PEI;

The UE may only report capability indication information indicating that the UE supports the first type of PEI, while implicitly indicating that that the UE does not support the second type of PEI.

The UE may report capability indication information indicating that the UE supports both the first type of PEI and the second type of PEI. The capability indication information may use two flags to respectively indicate that the UE supports the first type of PEI and the second type of PEI.

The UE may report capability indication information indicating that the UE supports the first type of PEI, but does not support the second type of PEI. Supporting only the first type of PEI may be indicated by not reporting a flag, that is, implicitly indicating that the UE does not support the second type of PEI by setting the corresponding flag as absence.

The UE may report capability indication information indicating that the UE supports the second type of PEI. The reporting that the UE supports the second type of PEI implicitly indicates that the UE also supports the first type of PEI.

The capability indication information reported by the UE indicates whether the UE supports the second type of PEI, which may include indicating whether the UE supports the second type of PEI at least corresponding to the second type of paging grouping mode.

Mode 3, the UE may only report to the base station whether the UE supports the second type of PEI at least corresponding to the second type of paging grouping mode.

The base station may also obtain from the core network device, capability indication information for whether the UE supports the second type of PEI at least corresponding to the first type of paging grouping mode. That is, the base station obtains from the core network device, whether the UE supports the second type of PEI at least corresponding to the first type of paging grouping mode. Then, the base station combines the two approaches to obtain the capability of the UE.

If the base station determines that the UE supports the second type of PEI at least corresponding to the first type of paging grouping mode, or supports the second type of PEI at least corresponding to the second type of paging grouping mode, then it is determined that the UE supports the first type of PEI.

If the base station determines that the UE does not support the second type of PEI at least corresponding to the first type of paging grouping mode, and does not support the second type of PEI at least corresponding to the second type of paging grouping mode, then it is determined that the UE does not support the first type of PEI.

In an embodiment, receiving the first capability indication information includes at least one of: receiving from the UE, the first capability indication information indicating whether the UE supports the first type of PEI; receiving from the UE, the first capability indication information indicating whether the UE supports a second type of PEI at least corresponding to a second type of paging grouping mode; receiving from a core network device, the first capability indication information; or

receiving from a counterpart base station, the first capability indication information.

The UE may determine whether the UE itself supports the first type of PEI. Therefore, the UE may send to the base station the capability indication information indicating whether the UE supports the first type of PEI.

The UE may determine whether the UE itself supports the second type of PEI at least corresponding to the second type of paging grouping mode. For example, the UE may determine whether the UE itself supports a paging grouping mode based on UE_ID. Therefore, the UE may send to the base station the capability indication information indicating whether the UE supports the second type of PEI at least corresponding to the second type of paging grouping mode.

In an example, the base station determines, based on the capability indication information reported from the UE, that the terminal supports the second type of PEI at least corresponding to the second type of paging grouping mode. The base station determines, based on the capability indication information reported by the UE, that the terminal does not support the second type of PEI at least corresponding to the second type of paging grouping mode. Alternatively, if the base station does not receive the capability indication information, it determines that the terminal does not support the second type of PEI at least corresponding to the second type of paging grouping mode.

In an embodiment, the capability indication information may be carried in UE capability information (UECapabilityInformation) or an uplink assistance message. The UE capability information indicates at least a frequency supported by the UE.

When the UE is released from the RRC connected state, the UE may carry the capability indication information in the uplink assistance message.

The capability indication information may also be sent by the core network device to the base station, and the capability indication information indicates whether the UE supports the first type of PEI, and whether the UE supports the second type of PEI at least corresponding to the second type of paging grouping mode.

Whether the UE supports the second type of PEI at least corresponding to the first type of paging grouping mode can be reported to the core network device by the UE through a non access stratum (NAS) signaling. Therefore, the capability indication information sent by the core network device to the base station may also indicate whether the UE supports the second type of PEI at least corresponding to the first type of paging grouping mode.

In an example, whether the terminal supports the second type of PEI at least corresponding to the first type of paging grouping mode is determined by the base station through an explicit indication based on the capability indication information sent by the core network device.

The capability of the UE may also be transmitted between base stations. The capability indication information may be sent by a counterpart base station.

In an example, the UE may be an inactive UE, and the counterpart base station may be an anchor base station of the UE. The anchor base station retains capability indication information of whether the UE supports a PEI. When the UE performs cell reselection within a coverage of the current base station, the current base station may obtain the capability indication information from the anchor base station, and then determine whether the UE supports the PEI.

In an example, when the UE in an inactive state performs cell reselection, the base station obtains the reporting capability of the terminal from the anchor base station.

For example, the capability indication information may be carried in a UE context response and sent to the base station. The capability indication information may be carried in a paging message from the core network device and sent to the base station.

The base station can directly determine whether the UE supports the first type of PEI based on the capability indication information sent by the counterpart base station.

The base station can directly determine whether the UE supports the second type of PEI at least corresponding to the first type of paging grouping mode based on the capability indication information sent by the counterpart base station.

The base station can directly determine whether the UE supports the second type of PEI at least corresponding to the second type of paging grouping mode based on the capability indication information sent by the counterpart base station.

The base station determines that the UE supports the first type of PEI based on the UE supporting the second type of PEI at least corresponding to the first type of paging grouping mode, or the UE supporting the second type of PEI at least corresponding to the second type of paging grouping mode.

The base station determines that the UE does not support the first type of PEI based on the UE not supporting the second type of PEI at least corresponding to the first type of paging grouping mode, or the UE not supporting the second type of PEI at least corresponding to the second type of paging grouping mode.

In an embodiment, in response to the counterpart end base station sending grouping information of the first type of paging grouping mode of the UE, it is determined that the UE supports a second type of PEI at least corresponding to a first type of paging grouping mode.

In an embodiment, receiving from the core network device, the first capability indication information includes: in response to receiving grouping information of a first type of paging grouping mode of the UE from the core network device, determining that the UE supports a second type of PEI at least corresponding to the first type of paging grouping mode.

The first capability indication information may be grouping information of the first type of paging grouping mode of the UE. When the core network device sends the grouping information of the first type of paging grouping mode of the UE to the base station, it may be determined that the UE supports the second type of PEI at least corresponding to the first type of paging grouping mode.

The grouping information may indicate a paging group. The grouping information may be a subgroup ID of the UE. If the core network device assigns a subgroup ID for the UE, it may be determined that the terminal supports a second type of PEI at least corresponding to the first type of paging grouping mode. It may be considered that the grouping information sent by the core network device is a way of implicitly indicating that the terminal supports the second type of PEI at least corresponding to the first type of paging grouping mode.

In an example, the terminal supports a second type of PEI at least corresponding to the first type of paging grouping mode, which is determined by the base station based on the subgroup ID sent by the core network device.

As illustrated in FIG. 4, the exemplary embodiment provides a method for information transmission. The method further includes at least one of the following steps 401a-401d.

At 401a, second capability indication information indicating whether the UE supports the first type of PEI is sent to a counterpart base station.

At 401b, second capability indication information indicating whether the UE supports the second type of PEI is sent to the counterpart base station.

At 401c, second capability indication information indicating whether the UE supports the first type of PEI is sent to a core network device.

At 401d, second capability indication information indicating whether the UE supports a second type of PE at least corresponding to a second type of paging grouping mode is sent to the core network device.

Here, the steps 401a, 401b, 401c and/or 401d may be implemented separately or in combination with the steps 301a, 301b and/or 201.

The capability of the UE may also be transmitted between base stations. The base station may send the capability indication information to the counterpart base station.

In an example, the UE may be a UE in an inactive state, the counterpart base station may be a base station where the UE performs cell reselection, and an anchor base station retains capability indication information of whether the UE supports the PEI. When the UE performs cell reselection within a coverage of the counterpart base station, the anchor base station may send capability indication information to the counterpart base station, and the counterpart base station may determine whether the UE supports the PEI.

The capability indication information transmitted between base stations may indicate at least one of: whether the UE supports the first type of PEI; whether the UE supports the second type of PEI.

After the base station receives the capability indication information reported by the UE, the base station may report the capability of the UE to the core network device. The capability indication information reported by the UE may indicate whether the UE supports the first type of PEI, and/or whether the UE supports the second type of PEI at least corresponding to the second type of paging grouping mode. Therefore, the capability indication information sent by the base station may also indicate whether the UE supports the first type of PEI and/or whether the UE supports the second type of PEI at least corresponding to the second type of paging grouping mode.

In an example, the UE reports the capability for the UE supporting the PEI to the base station through capability indication information, and the base station notifies the core network device through the capability indication information. The capability indication information may indicate whether the UE supports the first type of PEI, and/or whether the UE supports the second type of PEI at least corresponding to the second type of paging grouping mode. Whether the UE supports the second type of PEI at least corresponding to the first type of paging grouping mode is transmitted to the core network device by the terminal through a NAS signaling, and at this time the base station does not need to report.

In an example, the capability indication information may be carried in the following messages: UE CAPABILITY INFO INDICATION; or RRC INACTIVE TRANSITION REPORT.

In an embodiment, the base station sends to the UE the PEI supported by the UE.

After the base station determines the PEI that the UE may support, the base station may send to the UE the PEI that the UE may support in a subsequent paging process. In this way, the base station may send the PEI supported by the UE to wake up the UE and monitor the PO. When it is not necessary to wake up the UE, the UE will not be woken up for monitoring, thus reducing the power consumption caused by frequent wake-up of the UE.

As illustrated in FIG. 5, the exemplary embodiment provides a method for information transmission. The method further includes the following step 501.

At 501, third capability indication information is sent to a UE. The third capability indication information is configured for the UE to determine a PEI that the base station is capable of sending.

Here, the step 501 may be implemented alone or in combination with the step 301a, the step 301b, the step 401a, the step 401b, the step 401c, the step 401d and/or the step 201.

The capability indication information may indicate a PEI that the base station is capable of sending. The UE may determine whether to monitor the PEI sent by the base station based on the PEI that the base station is capable of sending and the PEI supported by the UE itself.

In an example, if the UE may support the PEI sent by the base station, the UE may monitor the PEI. If the UE does not support the PEI sent by the base station, the UE may not monitor the PEI sent by the base station.

If the UE does not monitor the PEI of the base station, the UE may wake up at each PO and monitor a paging message.

The capability indication information may be carried in a common signaling. For example, the capability indication information may be carried in a system message and broadcast to the UE.

The capability indication information may be carried in a dedicated signaling. For example, the capability indication information may be carried in an RRC message and sent to the UE.

In an embodiment, the third capability indication information is configured for the UE to determine at least one of the following that the base station is capable of sending: the first type of PEI; a second type of PEI corresponding to a first type of paging grouping mode, in which the first type of PEI is different from the second type of PEI; a second type of PEI corresponding to a second type of paging grouping mode; or a second type of PEI corresponding to the first type of paging grouping mode and the second type of paging grouping mode.

In an example, if the base station is capable of sending the first type of PEI, then the UE supporting the first type of PEI may monitor the PEI and monitor a paging message based on an indication of the PEI.

In an example, if the base station is capable of sending the first type of PEI, then the UE that does not support the first type of PEI may not monitor the PEI, fall back to a legacy paging method, and wake up at each PO to monitor a paging message.

In an example, if the base station is capable of sending the second type of PEI corresponding to the first type of paging grouping mode, then the UE supporting the second type of PEI corresponding to the first type of paging grouping mode may monitor the PEI and monitor a paging message based on the indication of the PEI.

In an embodiment, the UE determines whether it needs to wake up at PO based on the grouping information of the first type of paging grouping mode of the UE itself and the indication of PEI.

For example, the PEI may indicate a group that needs to be awakened in the first type of paging grouping mode, and the UE may determine whether its own group needs to be awakened.

In an example, if the base station is capable of sending the second type of PEI corresponding to the first type of paging grouping mode, then the UE that does not support the second type of PEI corresponding to the first type of paging grouping mode may not the PEI, fall back to the legacy paging mode, and wake up at each PO to monitor a paging message.

In an embodiment, if the base station is capable of sending the second type of PEI corresponding to the first type of paging grouping mode, a UE supporting the second type of PEI corresponding to the first type of paging grouping mode may monitor the PEI sent by the base station only when the UE is configured with grouping information of the first type of paging grouping mode, otherwise, the UE does not monitor the PEI.

In an example, if the base station is capable of sending the second type of PEI corresponding to the second type of paging grouping mode, a UE supporting the second type of PEI corresponding to the second type of paging grouping mode may monitor the PEI and monitor a paging message based on an indication of the PEI.

In an example, if the base station is capable of sending the second type of PEI corresponding to the second type of paging grouping mode, a UE that does not support the second type of PEI corresponding to the second type of paging grouping mode may not monitor the PEI, fall back to the legacy paging mode, and wake up at each PO to monitor a paging message.

In an example, the base station is capable of sending the second type of PEI corresponding to both the first type of paging grouping mode and the second type of paging grouping mode. If the UE supports the second type of PEI at least corresponding to the first type of paging grouping mode, or the second type of PEI at least corresponding to the second type of paging grouping mode, the UE may monitor the PEI and monitor a paging message based on an indication of the PEI.

In an example, the base station is capable of sending the second type of PEI corresponding to both the first type of paging grouping mode and the second type of paging grouping mode. If the UE neither supports the second type of PEI at least corresponding to the first type of paging grouping mode, nor the second type of PEI at least corresponding to the second type of paging grouping mode, the UE may not monitor the PEI, fall back to the legacy paging mode, and wake up at each PO to monitor a paging message.

In an embodiment, if the base station is capable of sending the second type of PEI corresponding to both the first type of paging grouping mode and the second type of paging grouping mode, a UE that only supports the second type of PEI corresponding to the first type of paging grouping mode may monitor the PEI sent by the base station only when the UE is configured the grouping information of the first type of paging grouping mode, otherwise, the UE does not monitor the PEI.

In an embodiment, if the base station is capable of sending the second type of PEI corresponding to both the first type of paging grouping mode and the second type of paging grouping mode, and the UE supports the second type of PEI at least corresponding to the first type of paging grouping mode, and the second type of PEI at least corresponding to the second type of paging grouping mode, the UE may monitor the PEI sent by the base station, and use grouping information of the first type of paging grouping mode of the UE and grouping information of the second type of paging grouping mode to monitor/detect the PEI, and determine whether to wake up at the PO a group corresponding to the grouping information of the first type of paging grouping mode or a group corresponding to the grouping information of the second type of paging grouping mode. Here, the grouping information of the first type of paging grouping mode of the UE may be a subgroup ID assigned by the core network device, and the grouping information of the first type of paging grouping mode of the UE may be a subgroup ID determined based on the UE_ID.

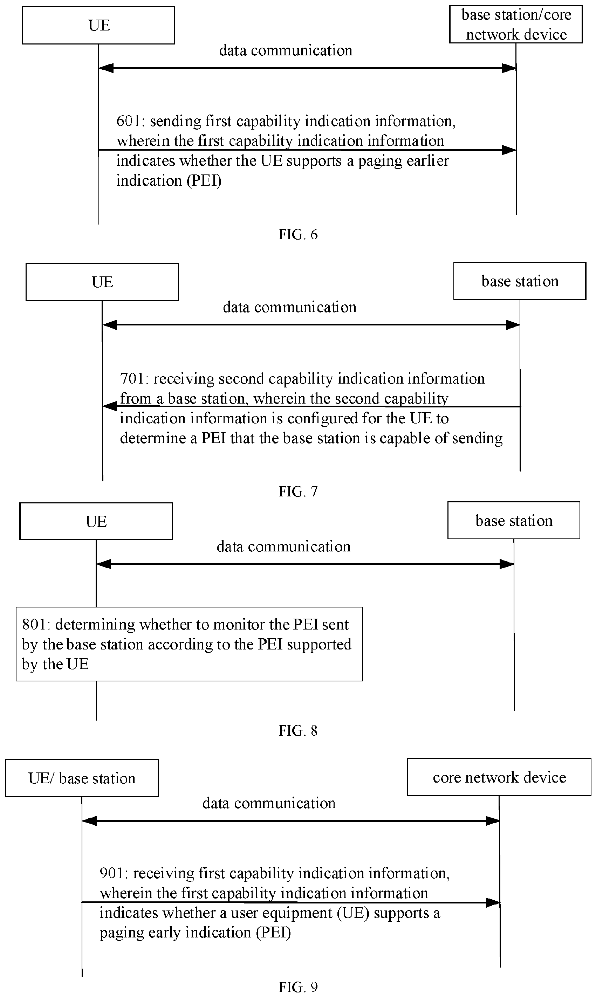

As illustrated in FIG. 6, the exemplary embodiment provides a method for information transmission, which may be performed by a UE in a cellular mobile communication system. The method includes the following step 601.

At 601, first capability indication information is sent. The first capability indication information indicates whether the UE supports a PEI.

The PEI may be used to instruct the UE to wake up and monitor a paging message within a predetermined PO. Here, the predetermined PO may include one or more POs after the PEI. Whether the PEI is supported may include but is not limited to: whether waking up within the predetermined PO based on an indication of PEI is supported.

The PEI may be used to wake up all UEs, and may also be used to wake up UEs in a predetermined range (such as a predetermined group, a predetermined type, etc.). The PEI may include different indication information for UEs in different groups, and is used to wake up the UEs in different groups. Whether the PEI is supported may include but is not limited to: whether a PEI for waking up all UEs is supported, and/or whether a PEI for waking up UEs within a predetermined range is supported.

The UE may carry the capability indication information in an uplink signaling during a random access process or after establishing an RRC connection. The UE may also carry capability indication information in a NAS signaling or the like.

The capability indication information may be received by a base station or a core network device, etc.

After receiving the capability indication information, the base station may determine whether the UE supports the PEI. If the UE supports the PEI, the base station uses the PEI supported by the UE to wake up the UE to monitor the PO. This reduces the situation where the base station cannot determine whether the UE supports the PEI, and sends the PEI to the UE when the UE does not support the PEI, or does not send the PEI to the UE when the UE supports the PEI. Sending the PEI to the UE when the UE does not support the PEI may increase the workload of the base station. If the PEI is not sent to the UE when the UE supports the PEI, since the UE cannot receive the PEI, it needs to wake up frequently to monitor the PO, resulting in UE power consumption.

In this way, the capability indication information indicates whether the UE supports the PEI. The base station may determine the PEI capability of the UE, which reduces the misjudgment to the UE capability due to the uncertainty of the base station for the PEI capability of the UE, and improves a judgment accuracy of the base station for the PEI capability of the UE.

In an embodiment, the first capability indication information indicates at least one of: whether the UE supports a first type of PEI; or whether the UE supports a second type of PEI, in which the first type of PEI is different from the second type of PEI.

The first type of PEI may have 1 bit for indicating whether to wake up the UE. The second type of PEI may have a plurality of bits for indicating whether to wake up the UE.

The first type of PEI is a common PEI that may be used to wake up all UEs that need to monitor the same PO.

The second type of PEI is a PEI for a paging group that may be used to wake up all UEs monitoring the same PO within a corresponding paging group according to the paging group.

When the PEI has 1 bit, that is, the PEI is the first type of PEI, the PEI may be used to wake up all UEs that receive the PEI. That is, the first type of PEI does not distinguish the paging group of the UE.

When the PEI has a plurality of bits, that is, the PEI is the second type of PEI, each of the plurality of bits may be used to wake up one or more UEs in a paging group. That is, the second type of PEI distinguishes the paging group of the UE.

In an example, the PEI may include POnumPerPEI segments, which may be referred to as subgroupsNum-PerPO field. Each of the segments may correspond to one PO. Each of the segments contains subgroupsNumPerPO bits, each of which carries a paging indication. The paging indication is used to indicate whether to perform waking up for one or more paging groups at the corresponding PO.

The PEI is a first type of PEI, and the subgroupsNumPerPO field has a 1-bit paging indication bit, which is used to wake up all UEs that receive the PEI to monitor a paging message within the PO. For example, when the paging indication bit is "1", all UEs receiving the PEI are awakened to monitor a paging message within the PO period. When the paging indication bit is "0", it instructs the UE to remain in a dormant/sleep state within the PO period, such as maintaining an RRC idle state or an RRC inactive state.

The PEI is a second type of PEI and the subgroupsNumPerPO field has a plurality of bits, each of which may correspond to a paging group. UEs in a different paging group determine whether to wake up within the PO period based on a bit corresponding to their own paging group. For example, the subgroupsNumPerPO field has two bits corresponding to two paging groups respectively. When one of the two bits is "1", a UE in a paging group corresponding to the bit is awakened to monitor the paging message within the PO. When the other of the two bits is "0", it indicates that a UE in a paging group corresponding to the bit remains in a sleep state within the PO.

The capability indication information may be used to indicate whether the UE supports the first type of PEI and/or the second type of PEI.

If the capability indication information indicates that the UE supports the first type of PEI, the base station may use the first type of PEI to wake up the UE to monitor the PO. This reduces the situation where the UE needs to wake up at each PO and reduces the power consumption of the UE.

If the capability indication information indicates that the UE supports the second type of PEI, the base station may use the second type of PEI to wake up the UE based on the paging group to monitor the PO. This reduces the situation where the UE is awaken at the PO when the paging group the UE belongs to is not paged, and thus reduces the power consumption of the UE.

In this way, the capability indication information indicates whether the UE supports the PEI. The base station may determine the PEI capability of the UE, and send the PEI supported by the UE to wake up the UE to monitor the PO based on the PEI capability of the UE. When the UE does not need to be awaken, the UE is not awaken for monitoring, which reduces the power consumption caused by frequent wake-up of the UE.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

The first type of paging grouping mode and the second type of paging grouping mode use different methods to divide paging groups. The first type of paging grouping mode and the second type of paging mode may also be executed by different network nodes. The first type of paging grouping mode and the second type of paging mode may also be executed by the same network node.

The core network device or the base station etc. may divide the paging groups by using different paging grouping modes respectively, thus generating different types of paging groups. In each paging grouping mode, a plurality of paging groups can be obtained by dividing. For example, the UEs may be grouped based on their service types, or their transmission rates, etc.

The second type of PEI at least corresponding to the first type of paging grouping mode may be used to at least indicate whether to wake up a UE in a paging group corresponding to the first type of paging grouping mode.

The second type of PEI at least corresponding to the second type of paging grouping mode may be used to at least indicate whether to wake up a UE in a paging group corresponding to the second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

The first type of paging grouping mode may be a mode in which the core network device divides paging groups based on UE attributes. Here, the UE attributes may include but are not limited to: a service type of the UE, a transmission quantity of the UE, a transmission bandwidth of the UE, etc.

The second type of paging grouping mode may be a mode in which the base station, divides paging groups based on UE identification information (UE_ID). For example, the base station can use the above expression (1) to determine the paging group of the UE.

Each bit in the plurality of bits of the second type of PEI may be used to indicate whether one or more paging groups are awakened within a predetermined PO. Here, the paging groups may include: paging groups divided by the first type of paging grouping mode, or paging groups divided by the second type of paging grouping mode.

In an example, the second type of PEI may have 8 bits, where each of 4 bits indicates each one of 4 paging groups divided by the first type of paging grouping mode, and each of the other 4 bits indicates each one of the 4 paging groups divided by the second type of paging grouping mode.

The second type of PEI at least corresponding to the first type of paging grouping mode may include the second type of PEI corresponding to only the first type of paging grouping mode, or may include the second type of PEI corresponding to both the first type of paging grouping mode and the second type of paging grouping mode.

The second type of PEI at least corresponding to the second type of paging grouping mode may include the second type of PEI corresponding to only the second type of paging grouping mode, and may also include the second type of PEI corresponding to both the first type of paging grouping mode and the second type of paging grouping mode.

By the capability indication information that indicates whether the UE supports PEIs corresponding to different types of paging groups, the base station may determine the supporting capability of the UE for the PEIs corresponding to

EP 4 465 713 A1
different types of paging groups, then send the PEI corresponding to a type of paging group for the UE, so as to wake up the UE to monitor the PO, which reduces the situation where the UE is awakened within the PO for other types of paging groups, and reduces the power consumption caused by the UE being awakened in an invalid PO.

In an embodiment, sending the first capability indication information includes at least one of: sending to a base station, the first capability indication information indicating whether the UE supports the first type of PEI; sending to the base station, the first capability indication information indicating whether the UE supports a second type of PEI at least corresponding to a second type of paging grouping mode; or sending to a core network device, the first capability indication information indicating whether the UE supports a second type of PEI at least corresponding to a first type of paging grouping mode

The UE may determine whether the UE itself supports the first type of PEI. Therefore, the UE may send to the base station the capability indication information indicating whether the UE supports the first type of PEI.

The UE may determine whether the UE itself supports the second type of PEI at least corresponding to the second type of paging grouping mode. For example, the UE may determine whether the UE itself supports a paging grouping mode based on UE_ID. Therefore, the UE may send to the base station the capability indication information indicating whether the UE supports the second type of PEI at least corresponding to the second type of paging grouping mode.

In an example, the base station determines, based on the capability indication information reported from the UE, that the terminal supports the second type of PEI at least corresponding to the second type of paging grouping mode. The base station determines, based on the capability indication information reported by the UE, that the terminal does not support the second type of PEI at least corresponding to the second type of paging grouping mode. Alternatively, if the base station does not receive the capability indication information, it determines that the terminal does not support the second type of PEI at least corresponding to the second type of paging grouping mode.

In an embodiment, the capability indication information may be carried in UE capability information (UECapabilityInformation) or an uplink assistance message. The UE capability information indicates at least a frequency supported by the UE.

When the UE is released from the RRC connected state, the UE may carry the capability indication information in the uplink assistance message.

Whether the UE supports the second type of PEI at least corresponding to the first type of paging grouping mode can be reported to the core network device by the UE through a NAS signaling. Therefore, the capability indication information sent by the core network device to the base station may also indicate whether the UE supports the second type of PEI at least corresponding to the first type of paging grouping mode.

In an example, whether the terminal supports the second type of PEI at least corresponding to the first type of paging grouping mode is determined by the base station through an explicit indication based on the capability indication information sent by the core network device.

As illustrated in FIG. 7, the exemplary embodiment provides a method for information transmission. The method further includes the following step 701.

At 701, second capability indication information is received from a base station. The second capability indication information is configured for the UE to determine a PEI that the base station is capable of sending.

Here, the step 701 may be implemented alone or in combination with the step 601 .

The capability indication information may indicate the PEI that the base station is capable of sending. The UE may determine whether to monitor the PEI sent by the base station based on the PEI that the base station is capable of sending and the PEI supported by the UE itself.

In an example, if the UE may support the PEI sent by the base station, the UE may monitor the PEI. If the UE does not support the PEI sent by the base station, the UE may not monitor the PEI sent by the base station.

If the UE does not monitor the PEI of the base station, the UE may wake up at each PO and monitor a paging message.

The capability indication information may be carried in a common signaling. For example, the capability indication information may be carried in a system message and broadcast to the UE.

The capability indication information may be carried in a dedicated signaling. For example, the capability indication information may be carried in an RRC message and sent to the UE.

In an embodiment, the third capability indication information is configured for the UE to determine at least one of the following that the base station is capable of sending: the first type of PEI; a second type of PEI corresponding to a first type of paging grouping mode, in which the first type of PEI is different from the second type of PEI; a second type of PEI corresponding to a second type of paging grouping mode; or a second type of PEI corresponding to the first type of paging grouping mode and the second type of paging grouping mode.

As illustrated in FIG. 8, the exemplary embodiment provides a method for information transmission. The method includes the following step 801.

At 801, it is determined whether to monitor the PEI sent by the base station according to the PEI supported by the UE.

Here, the step 801 may be implemented alone or in combination with the step 601 and/or the step 701.

The UE may determine whether to monitor the PEI sent by the base station based on its own capability. If the PEI is not monitored, a solution of related art may be adopted to monitor a paging message at each PO.

In an embodiment, determining whether to monitor the PEI sent by the base station according to the PEI supported by the UE includes at least one of: in response to determining that the UE supports the PEI that the base station is capable of sending, monitoring the PEI sent by the base station; or in response to determining that the UE does not support the PEI that the base station is capable of sending, not monitoring the PEI sent by the base station.

If the UE supports the PEI sent by the base station, the UE may monitor the PEI and may wake up within the PO based on an indication of the PEI, which reduces the situation where the UE is awaken at each PO and saves UE power consumption.

If the UE does not support the PEI sent by the base station, the UE uses a method in the related art to wake up at each PO and monitor a paging message, which reduces the situation of missing paging messages.

In an embodiment, in response to determining that the UE supports the PEI that the base station is capable of sending, monitoring the PEI sent by the base station includes at least one of: in response to the base station being capable of sending the first type of PEI and the UE supporting the first type of PEI, monitoring the PEI sent by the base station; or in response to the base station being capable of sending the second type of PEI and the UE supporting the second type of PEI, monitoring the PEI sent by the base station.

In an example, if the base station is capable of sending the first type of PEI, then the UE supporting the first type of PEI may monitor the PEI and monitor a paging message based on an indication of the PEI.

In an example, if the base station is capable of sending the first type of PEI, then the UE that does not support the first type of PEI may not monitor the PEI, fall back to a legacy paging method, and wake up at each PO to monitor a paging message.

In an example, if the base station is capable of sending the second type of PEI, then the UE supporting the second type of PEI may monitor the PEI and monitor a paging message based on an indication of the PEI.

In an example, if the base station is capable of sending the second type of PEI, then the UE that does not support the second type of PEI may not monitor the PEI, fall back to the legacy paging method, and wake up at each PO to monitor a paging message.

In an embodiment, the UE determines whether it needs to wake up at PO based on grouping information of the first type of paging grouping mode and/or grouping information of the second type of paging grouping mode of the UE itself, and an indication of PEI.

For example, the PEI may at least indicate a paging group for the first type of paging grouping mode that needs to be awakened, and the UE may determine whether its own paging group for the first type of paging grouping mode needs to be awakened.

Alternatively, the PEI may at least indicate a paging group for the second type of paging grouping mode that needs to be awakened, and the UE may determine whether its own paging group for the second type of paging grouping mode needs to be awakened.

In an embodiment, in response to the base station being capable of sending the first type of PEI and the UE supporting the first type of PEI, monitoring the PEI sent by the base station includes at least one of: in response to the base station being capable of sending the first type of PEI and the UE supporting the first type of PEI and the second type of PEI, monitoring the PEI sent by the base station; or in response to the base station being capable of sending the first type of PEI and the UE supporting the second type of PEI, monitoring the PEI sent by the base station.

The capability indication information may indicate whether the UE supports the PEI and PEIs corresponding to different paging grouping modes, etc. in an explicit indication manner.

The capability indication information indicating the UE capability indicates that the UE supports the first type of PEI and the second type of PEI. Then, when the base station is capable of sending the first type of PEI, the UE may monitor the PEI sent by the base station.

The capability indication information indicating the UE capability indicates that the UE supports the second type of PEI, and the capability indication information may implicitly indicate that the UE supports the first type of PEI at the same time. In this case, if the base station supports the first type of PEI, the UE may monitor the PEI sent by the base station.

In an embodiment, in response to the base station being capable of sending the second type of PEI and the UE supporting the second type of PEI, monitoring the PEI sent by the base station includes at least one of: in response to the base station being capable of sending a second type of PEI at least corresponding to a first type of paging grouping mode, and the UE supporting the second type of PEI at least corresponding to the first type of paging grouping mode, monitoring the PEI sent by the base station; or in response to the base station being capable of sending a second type of PEI at least corresponding to a second type of paging grouping mode, and the UE supporting the second type of PEI at least corresponding to the second type of paging grouping mode, monitoring the PEI sent by the base station.

In an example, if the base station is capable of sending the second type of PEI corresponding to the first type of paging grouping mode, then the UE supporting the second type of PEI corresponding to the first type of paging grouping mode may monitor the PEI and monitor a paging message based on an indication of the PEI.

In an example, if the base station is capable of sending send the second type of PEI corresponding to the first type of paging grouping mode, then the UE that does not support the second type of PEI corresponding to the first type of paging grouping mode may not monitor the PEI, fall back to the legacy paging mode, and wake up at each PO to monitor a paging message.

In an example, if the base station is capable of sending the second type of PEI corresponding to the second type of paging grouping mode, then the UE supporting the second type of PEI corresponding to the second type of paging grouping mode may monitor the PEI and monitor a paging message based on an indication of the PEI.

In an example, if the base station is capable of sending the second type of PEI corresponding to the second type of paging grouping mode, then the UE that does not support the second type of PEI corresponding to the second type paging grouping may not monitor the PEI, fall back to the legacy paging mode, and wake up at each PO to monitor a paging message.

In an example, the base station is capable of sending the second type of PEI corresponding to both the first type of paging grouping mode and the second type of paging grouping mode. If the UE supports the second type of PE at least corresponding to the first type of paging grouping mode, or the second type of PE at least corresponding to the second type of paging grouping mode, then the UE may monitor the PEI and monitor a paging message based on an indication of the PEI.

In an example, the base station is capable of sending the second type of PEI corresponding to both the first type of paging grouping mode and the second type of paging grouping mode. If the UE neither supports the second type of PEI at least corresponding to the first type of paging grouping mode, nor the second type of PEI at least corresponding to the second type of paging grouping mode, the UE may not monitor the PEI, fall back to the legacy paging mode, and wake up at each PO to monitor a paging message.

In an embodiment, in response to the base station being capable of sending the second type of PEI at least corresponding to the first type of paging grouping mode, and the UE supporting the second type of PEI at least corresponding to the first type of paging grouping mode, monitoring the PEI sent by the base station, includes: in response to the base station being capable of sending the second type of PEI at least corresponding to the first type of paging grouping mode, and the UE having grouping information of the first type of paging grouping mode, monitoring the PEI sent by the base station.

In an example, if the base station is capable of sending the second type of PEI corresponding to the first type of paging grouping mode, a UE supporting the second type of PEI corresponding to the first type of paging grouping mode may monitor the PEI sent by the base station only when the UE is configured with grouping information of the first type of paging grouping mode, otherwise, the UE does not monitor the PEI.

In an example, if the base station is capable of sending the second type of PEI corresponding to both the first type of paging grouping mode and the second type of paging grouping mode, a UE that only supports the second type of PEI corresponding to the first type of paging grouping mode may monitor the PEI sent by the base station only when the UE is configured the grouping information of the first type of paging grouping mode, otherwise, the UE does not monitor the PEI.

In an example, if the base station is capable of sending the second type of PEI corresponding to both the first type of paging grouping mode and the second type of paging grouping mode, and the UE supports the second type of PEI at least corresponding to the first type of paging grouping mode, and the second type of PEI at least corresponding to the second type of paging grouping mode, the UE may monitor the PEI sent by the base station, and use grouping information of the first type of paging grouping mode of the UE and grouping information of the second type of paging grouping mode to monitor/detect the PEI, and determine whether to wake up at the PO a group corresponding to the grouping information of the first type of paging grouping mode or a group corresponding to the grouping information of the second type of paging grouping mode. Here, the grouping information of the first type of paging grouping mode of the UE may be a subgroup ID assigned by the core network device, and the grouping information of the first type of paging grouping mode of the UE may be a subgroup ID determined based on the UE_ID.

As illustrated in FIG. 9, the exemplary embodiment provides a method for information transmission, which may be performed by a core network device in a cellular mobile communication system. The method includes the following step 901.

At 901, first capability indication information is received. The first capability indication information indicates whether a UE supports a PEI.

The PEI may be used to instruct the UE to wake up and monitor a paging message within a predetermined PO. Here, the predetermined PO may include one or more POs after the PEI. Whether the PEI is supported may include but is not limited to: whether waking up within the predetermined PO based on an indication of PEI is supported.

The PEI may be used to wake up all UEs, and may also be used to wake up UEs in a predetermined range (such as a predetermined group, a predetermined type, etc.). The PEI may include different indication information for UEs in different groups, and is used to wake up the UEs in different groups. Whether the PEI is supported may include but is not limited to: whether a PEI for waking up all UEs is supported, and/or whether a PEI for waking up UEs within a predetermined range is supported.

In addition to carrying paging information, PEI may also be subsequently extended to carry other information.

The capability indication information may be reported by the base station to the core network device or sent by the UE to the core network device. The UE may also carry the capability indication information in a NAS signaling or the like.

After receiving the capability indication information, the core network device may determine whether the UE supports the PEI. If the UE supports the PEI, the core network device uses the PEI supported by the UE to wake up the UE to monitor the PO. This reduces the situation where the core network device cannot determine whether the UE supports the PEI, and sends the PEI to the UE when the UE does not support the PEI, or does not send the PEI to the UE when the UE supports the PEI. Sending the PEI to the UE when the UE does not support the PEI may increase the workload of the core network device. If the PEI is not sent to the UE when the UE supports the PEI, since the UE cannot receive the PEI, it needs to wake up frequently to monitor the PO, resulting in UE power consumption.

In this way, the capability indication information indicates whether the UE supports PEI. The core network device may determine the PEI capability of the UE, which reduces the misjudgment to the UE capability due to the uncertainty of the core network device for the PEI capability of the UE, and improves a judgment accuracy of the core network device for the PEI capability of the UE.

In an embodiment, the first capability indication information indicates at least one of: whether the UE supports a first type of PEI; or whether the UE supports a second type of PEI, in which the first type of PEI is different from the second type of PEI.

The first type of PEI may have 1 bit for indicating whether to wake up the UE, that is, a PEI that does not carry a paging group.

The first type of PEI may be further expanded and used for purposes other than paging.

In summary, the UE supports the first type of PEI, that is, the terminal has the capability to monitor a PEI signal, where the PEI signal may carry paging and may also be used to carry other information.

The second type of PEI may have a plurality of bits for indicating whether to wake up the UE, i.e., a paging grouped PEI

The second type of PEI may be a subset of the first type of PEI.

In an embodiment, the first type of PEI is a common PEI or an ungrouped PEI, which may be used to wake up all UEs that need to monitor the same PO or all UEs in a group.

In an embodiment, the second type of PEI is a PEI for a paging group that may be used to wake up all UEs monitoring the same PO within a corresponding paging group according to the paging group.

When the PEI has 1 bit, that is, the PEI is the first type of PEI, the PEI may be used to wake up all UEs that receive the PEI. That is, the first type of PEI does not distinguish the paging group of the UE.

When the PEI has a plurality of bits, that is, the PEI is the second type of PEI, each of the plurality of bits may be used to wake up one or more UEs in a paging group. That is, the second type of PEI distinguishes the paging group of the UE.

In an example, the PEI may include POnumPerPEI segments, which may be referred to as subgroupsNum-PerPO field. Each of the segments may correspond to one PO. Each of the segments contains subgroupsNumPerPO bits, each of which carries a paging indication. The paging indication is used to indicate whether to perform waking up for one or more paging groups at the corresponding PO.

The PEI is a first type of PEI, and the subgroupsNumPerPO field has a 1-bit paging indication bit, which is used to wake up all UEs that receive the PEI to monitor a paging message within the PO. For example, when the paging indication bit is "1", all UEs receiving the PEI are awakened to monitor a paging message within the PO period. When the paging indication bit is "0", it instructs the UE to remain in a dormant/sleep state within the PO period, such as maintaining an RRC idle state or an RRC inactive state.

The PEI is a second type of PEI and the subgroupsNumPerPO field has a plurality of bits, each of which may correspond to a paging group. UEs in a different paging group determine whether to wake up within the PO period based on a bit corresponding to their own paging group. For example, the subgroupsNumPerPO field has two bits corresponding to two paging groups respectively. When one of the two bits is "1", a UE in a paging group corresponding to the bit is awakened to monitor the paging message within the PO. When the other of the two bits is "0", it indicates that a UE in a paging group corresponding to the bit remains in a sleep state within the PO.

The capability indication information may be used to indicate whether the UE supports the first type of PEI and/or the second type of PEI.

If the capability indication information indicates that the UE supports the first type of PEI, the base station may use the first type of PEI to wake up the UE to monitor the PO. This reduces the situation where the UE needs to wake up at each PO and reduces the power consumption of the UE.

If the capability indication information indicates that the UE supports the second type of PEI, the base station may use the second type of PEI to wake up the UE based on the paging group to monitor the PO. This reduces the situation where the UE is awaken at the PO when the paging group the UE belongs to is not paged, and thus reduces the power consumption of the UE.

In this way, the capability indication information indicates whether the UE supports the PEI. The base station may determine the PEI capability of the UE, and send the PEI supported by the UE to wake up the UE to monitor the PO based on the PEI capability of the UE. When the UE does not need to be awaken, the UE is not awaken for monitoring, which reduces the power consumption caused by frequent wake-up of the UE.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

The first type of paging grouping mode and the second type of paging grouping mode use different methods to divide paging groups. The first type of paging grouping mode and the second type of paging mode may also be executed by different network nodes. The first type of paging grouping mode and the second type of paging mode may also be executed by the same network node.

The core network device or the base station etc. may divide the paging groups by using different paging grouping modes respectively, thus generating different types of paging groups. In each paging grouping mode, a plurality of paging groups can be obtained by dividing. For example, the UEs may be grouped based on their service types, or their transmission rates, etc.

The second type of PEI at least corresponding to the first type of paging grouping mode may be used to at least indicate whether to wake up a UE in a paging group corresponding to the first type of paging grouping mode.

The second type of PEI at least corresponding to the second type of paging grouping mode may be used to at least indicate whether to wake up a UE in a paging group corresponding to the second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

The first type of paging grouping mode may be a mode in which the core network device divides paging groups based on UE attributes. Here, the UE attributes may include but are not limited to: a service type of the UE, a transmission quantity of the UE, a transmission bandwidth of the UE, etc.

The second type of paging grouping mode may be a mode in which the base station, divides paging groups based on UE identification information (UE_ID). For example, the base station can use the above expression (1) to determine the paging group of the UE.

Each bit in the plurality of bits of the second type of PEI may be used to indicate whether one or more paging groups are awakened within a predetermined PO. Here, the paging groups may include: paging groups divided by the first type of paging grouping mode, or paging groups divided by the second type of paging grouping mode.

In an example, the second type of PEI may have 8 bits, where each of 4 bits indicates each one of 4 paging groups divided by the first type of paging grouping mode, and each of the other 4 bits indicates each one of the 4 paging groups divided by the second type of paging grouping mode.

The second type of PEI at least corresponding to the first type of paging grouping mode may include the second type of PEI corresponding to only the first type of paging grouping mode, or may include the second type of PEI corresponding to both the first type of paging grouping mode and the second type of paging grouping mode.

The second type of PEI at least corresponding to the second type of paging grouping mode may include the second type of PEI corresponding to only the second type of paging grouping mode, and may also include the second type of PEI corresponding to both the first type of paging grouping mode and the second type of paging grouping mode.

By the capability indication information that indicates whether the UE supports PEIs corresponding to different types of paging groups, the base station may determine the supporting capability of the UE for the PEIs corresponding to different types of paging groups, then send the PEI corresponding to a type of paging group for the UE, so as to wake up the UE to monitor the PO, which reduces the situation where the UE is awakened within the PO for other types of paging groups, and reduces the power consumption caused by the UE being awakened in an invalid PO.

In an embodiment, receiving the first capability indication information includes at least one of: receiving from the UE, the first capability indication information indicating whether the UE supports a second type of PEI at least corresponding to a first type of paging grouping mode; receiving from a base station, the first capability indication information indicating whether the UE supports the first type of PEI; or receiving from a base station, the first capability indication information indicating whether the UE supports a second type of PE at least corresponding to a second type of paging grouping mode.

The capability indication information may be sent by the UE to the core network device. For example, the UE may carry the capability indication information in a NAS signaling.

In an example, whether the UE supports the second type of PEI at least corresponding to the first type of paging grouping mode can be reported to the core network device by the UE through a NAS signaling. Therefore, the capability indication information sent by the core network device to the base station may also indicate whether the UE supports the second type of PEI at least corresponding to the first type of paging grouping mode.

In an example, whether the terminal supports the second type of PEI at least corresponding to the first type of paging grouping mode is determined by the base station through an explicit indication based on the capability indication information sent by the core network device.

After the base station receives the capability indication information reported by the UE, the base station may report the capability of the UE to the core network device. The capability indication information reported by the UE may indicate whether the UE supports the first type of PEI, and/or whether the UE supports the second type of PEI at least corresponding to the second type of paging grouping mode. Therefore, the capability indication information sent by the base station may also indicate whether the UE supports the first type of PEI and/or whether the UE supports the second type of PEI at least corresponding to the second type of paging grouping mode.

In an example, the UE reports the capability for the UE supporting the PEI to the base station through capability indication information, and the base station notifies the core network device through the capability indication information. The capability indication information may indicate whether the UE supports the first type of PEI, and/or whether the UE supports the second type of PEI at least corresponding to the second type of paging grouping mode. Whether the UE supports the second type of PEI at least corresponding to the first type of paging grouping mode is transmitted to the core network device by the terminal through a NAS signaling, and at this time the base station does not need to report.

In an example, the capability indication information may be carried in the following messages: UE CAPABILITY INFO INDICATION; or RRC INACTIVE TRANSITION REPORT.

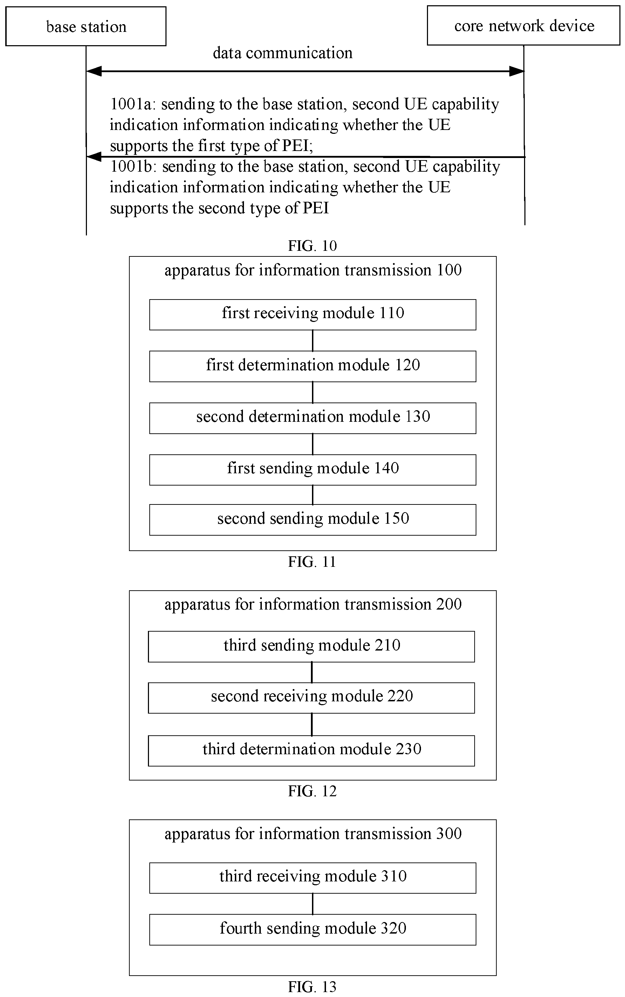

As illustrated in FIG. 10, the exemplary embodiment provides a method for information transmission. The method further includes at least one of the following steps 1001a-1001b.

At 1001a, second UE capability indication information indicating whether the UE supports the first type of PEI is sent to the base station.

At 1001b, second UE capability indication information indicating whether the UE supports the second type of PEI is sent to the base station.

Here, the step 1001a and/or the step 1001b may be implemented separately or in combination with the step 901.

The capability indication information may also be sent by the core network device to the base station, and the capability indication information indicates whether the UE supports the first type of PEI and whether the UE supports the second type of PEI at least corresponding to the second type of paging grouping mode.

Whether the UE supports the second type of PEI at least corresponding to the first type of paging grouping mode can be reported to the core network device by the UE through a NAS signaling. Therefore, the capability indication information sent by the core network device to the base station may also indicate whether the UE supports the second type of PEI at least corresponding to the first type of paging grouping mode.

In an example, whether the terminal supports the second type of PEI at least corresponding to the first type of paging grouping mode is determined by the base station through an explicit indication based on the capability indication information sent by the core network device.

The capability of the UE may also be transmitted between base stations. The base station may send the capability indication information to the counterpart base station.

A specific example is provided below in combination with any of the above embodiments:

1. There is a mode in which a base station is ensured to obtain the UE capability of supporting a PEI.
2. In the mode of 1, the base station obtains the capability of whether the UE supports a paging grouping scheme from capability indication information reported by the UE.

a) the information is used by the network as a reference for a paging group;

b) As an embodiment, the paging grouping scheme capability may be a capability of the UE to report its support for a UE_ID paging grouping scheme. Here, the capability of supporting the UE_ID paging grouping scheme means that the UE (i.e., the second capability type of terminal) supports the second type of PEI corresponding to the above second type of paging grouping mode.

c) As an embodiment, the paging group scheme capability may be a capability of the terminal to report its support for the PEI scheme. Here, the capability of supporting the PEI scheme means that the UE (i.e., the first capability type of terminal) supports the above first type of PEI. If the first type of PEI is used to carry an ungrouped PEI, the capability of supporting the ungrouped PEI is included.

The signaling design form is as follows:

Capability1-PEI ENUMERATED {true} OPTIONAL, and
Capability2-UEID-subgrouping ENUMERATED {true } OPTIONAL.

Furthermore, there are a plurality of manners to classify the UE capabilities:

1) Manner 1:

there is no correlation between a plurality of UE capabilities.
UE with the reporting capability 1 supports PEI monitoring;
UE with the reporting capability 2 supports PEI group paging monitoring;
That is, the two capabilities are reported independently.

2) Manner 2:

Supporting the capability 2 implicitly indicates supporting the capability 1, i.e., the capability 2 is a subset of the capability 1. The UE may further indicate supporting the capability 2 based on a value for the reporting capability 1 being true. In this case, both capability types of UEs may be collectively referred to as UEs supporting the PEI capability.
The UE may only report supporting the capability 1, which implicitly the capability 2 is not supported.
The UE may report supporting both the capability 1 and the capability 2 at the same time; that is, it is reported both flags are true.
The UE may report supporting the capability 1 without supporting the capability 2 at the same time. Supporting only the capability 1 is indicated by not reporting the flag, that is, an absence of the flag bit is used to implicitly indicate that the UE does not support the capability 2.
The UE may only report supporting the capability 2, which implies that the UE also supports the capability 1.

3) Manner 3:

The UE only reports the capability (i.e., capability 2) of supporting the UE_ID paging grouping scheme to the base station;
The base station obtains from the core network device whether the UE supports a core network paging grouping scheme, that is, obtains from the core network device whether the UE has the capability 3. The base station combines the two approaches to obtain the UE capability. Here, the capability of supporting the core network paging grouping scheme means that the UE supports the above second type of PEI corresponding to the first type of paging grouping mode.
The base station obtains that the UE supports the UE_ID paging grouping scheme (i.e., capability 2) or the core network paging grouping scheme (i.e., capability 3), that is, at least one of them is supported, then PEI is supported (i.e., the capability 1 of the UE is supported). At this time, the capability of supporting the PEI is implicitly indicated by the UE supporting the UE_ID paging grouping scheme (i.e., capability 2) or the core network paging grouping scheme (i.e., capability 3). That is, if the UE_ID paging grouping scheme or the core network paging grouping scheme is supported, it means that the UE supports the PEI.
The base station obtains that the UE does not support the UE_ID paging grouping scheme (i.e., capability 2) and the core network paging grouping scheme (i.e., capability 3), that is, both of them is not supported. Then, the UE does not support the PEI, that is, the capability 1 of the UE is not supported.
For ease of understanding, whether the UE supports the PEI is indicated by whether the UE supports the paging group scheme because in the R17 version, paging grouping information is sent only using the PEI. Currently, the PEI is mainly used to carry the paging grouping information.
In an example, the base station obtains that the UE supports the UE_ID paging grouping scheme by the capability indication information report received from the UE that carries the support.
In an example, the base station obtains that the UE does not support the UE_ID paging grouping scheme by the capability indication information report received from the UE that does not carry the support or by failing to receive a reporting indication.
The base station may obtain the UE capability of supporting the core network paging grouping scheme (i.e., capability 3) by obtaining a subgroup ID from the core network device. The core network device assigns a subgroup ID for the UE, and it is determined that the UE must have the capability to support the core network paging grouping scheme. This is an implicit indication.
The base station may obtain the UE capability of supporting the core network paging grouping scheme (i.e., capability 3) by obtaining an explicit indication from the core network device about whether to support or not. That is, an explicit indication bit is used to inform whether to support or not.

3. The UE informs the base station of its reporting capability

1) Reporting based on existing UE capability;
2) Reporting through uplink assistant information (UAI).

As an embodiment, the UE may report the auxiliary information when it is expected to leave the connected state, and reference auxiliary information of the paging group is useful only when the UE leaves the connected state.

4. The reporting capability of the UE can be transmitted between the core network device and the base station.

a) In an example, the capabilities reported by the terminal include capability 1 and capability 2;
b) As an embodiment: the UE capability is reported to the base station, and the base station notifies the core network device (capability 1 or capability 2) through UE CAPABILITY INFO INDICATION; the capability 3 is transmitted to the core network device by the UE through NAS and therefore does not need to be directly reported to the base station. The UE capability may also be reported to the base station via the following message: RRC INACTIVE TRANSITION REPORT
c) As an embodiment: the core network device transmits the UE capability in a paging message to the base station

Explicit manner: the paging message also carries UE capability information (capability 1 and/or capability 2 or capability 3), where the capability 3 is transmitted by the UE to the core network device through NAS.

Capability 3 can be indicated in both explicit and implicit manners.

The implicit indication is that the paging message carries paging grouping information assigned by the core network device as mentioned above, which indicates that the UE has the capability 3.

d) As an embodiment: the core network device transmits the UE capability to the base station in the following message

INITIAL CONTEXT SETUP REQUEST;
UE CONTEXT MODIFICATION REQUEST
HANDOVER REQUEST; or
PATH SWITCH REQUEST ACKNOWLEDGE.

5. Based on the above 1, UE capabilities are capability 1 and/or capability 2, and whether the UE supports the core network paging grouping scheme (i.e., capability 3) may be transmitted between base stations.

Scenario 1, when a handover occurs, the base station obtains a UE capability from the handover request message.

Scenario 2, when a UE in an inactive state performs cell reselection, the base station obtains a UE capability from an anchor base station.

a) As an embodiment, a UE context response may carry a UE capability.
b) As an embodiment, a radio access network paging (RAN Paging) message carries indication information of the UE capability.

The target base station (i.e., counterpart base station) may directly obtain the capability 1.

The target base station may directly obtain the capability 2.

The target base station may directly obtain the capability 3.

The target base station may directly obtain supports for the capability 2 or the capability 3, which means a support for the capability 1.

The target base station may directly obtain that the capability 2 is not supported and the capability 3 is not supported, which may be inferred that the capability 1 is not supported.

The subgroup ID of the core network device implicitly indicates that the UE supports the capability 3.

6. The UE and the core network device determines the following actions based on a UE capability and a paging scheme support capability of the base station:

a) The paging scheme support capability of the base station will be notified to the UE via a common or dedicated signaling;
b) The UE with a PEI support capability will monitor the PEI according to the base station capability, or monitor a PEI/paging message according to the base station capability and its own UE capability; and there are a UE with the capability 1, a UE with the capability 2, a UE with the capability 3, and a UE with both the capability 2 and the capability 3 in the network.

The base station capabilities are divided into one sending an ungrouped PEI and the other sending a grouped PEI, that is, a first type of base station capability and a second type of base station capability.

Case 1:

when the base station sends the ungrouped PEI, the UE supporting the capability 1, the UE supporting the capability 2, the UE supporting the capability 3, and the UE supporting both the capability 2 and the capability 3 need to monitor and be awakened;
when only the UE supporting the capability 1 support the type of PEI, and may use the type of PEI to monitor a paging message (i.e., the UE is awakened by the type of PEI);
Alternatively, the UE supporting the capability 2 and/or capability 3 supports the type of PEI, and may use the type of PEI to monitor a paging message (i.e., the UE is awakened by the type of PEI);
Monitoring the paging message using a PEI is monitoring a subsequent PO according to an indication of PEI and monitoring the paging message not according to the PEI. The subsequent PO is directly monitored without following the indication of PEI, that is, the PO is directly monitored, which is a legacy paging monitoring method.

The UE supporting the reporting capability 1 will support the type of PEI, and at this time uses the PEI to monitor a paging message (i.e., the UE is awakened by the PEI).
Alternatively, the UE supporting the capability 2/3 on the basis of supporting the capability 1 supports the type of PEI and may also use the PEI to monitor a paging message (i.e., the UE is awakened by this PEI).
The UE supporting the capability 2 or capability 3 (meaning that the UE also supports the capability 1) uses the PEI to monitor a paging message (i.e., the UE is awakened by the PEI).
If the UE does not support the capability 2 and the capability 3, it is inferred that the UE does not support the capability 1, and the UE then falls back to the legacy paging mode.

Case 2:

when the base station the grouped PEI, the base station capabilities are divided into one for sending a core network group PEI, one for sending a UE_ID group PEI, and one supporting the transmission of the core network group PEI and the UE_ID group PEI at the same time, which are called the second type of base station capability, the third type of base station capability and the fourth type of base station capability respectively.
The UE only supporting the capability type 1 will not be able to support the type of PEI, and at this time, the grouped PEI cannot be used to monitor a paging message. That is, the UE can only return to the legacy monitoring mode (that is, no PEI monitoring is required).
How to determine whether a UE only supports the capability 1 can be discussed in different situations:

1) Mode 1, separately reporting only the capability 1 is supported.
2) Mode 2, only the capability 1 is supported as described above.
3) Mode 3, UE does not support both the capability 2 and the capability 3.

UE with a paging grouping capability (i.e., UE supporting the capability 2 or the capability 3) will monitor the PEI.
Specifically, for a base station that only supports a UE_ID grouping mode (second type of base station capability),

UE supporting the capability 2 may monitor a paging message using the grouped PEI (regardless of whether a subgroup ID is assigned by the core network device), and there is a need to check whether a group which the UE belongs to is awakened;
UE that does not support the UE_ID grouping mode (for example, a UE with the capability 3 will not be able to support the type of PEI), at this time cannot use the grouped PEI to monitor a paging message, i.e., the UE can only return to the legacy monitoring mode (i.e., no PEI monitoring is required.

Specifically, for a base station that only supports a core network (CN)-assign grouping mode (third type of base station capability),
UE supporting the capability 3 may monitor a paging message the grouped PEI; and UE without the capability 3 does not monitor the PEI.

Furthermore, for only a UE to which the core network device assigns a subgroup ID, there is a need to determine whether a group to which the UE belongs is awakened; for a UE to which the core network device does not assign a subgroup ID, there is no need to monitor a PEI, since even if such UE has the capability 3, there is no need to monitor the PEI, which simplifies the process and saves power.

UE that only supports the capability 2 (i.e., UE that only supports the UE_ID grouping mode but not CN grouping capability) will not be able to support the type of PEI. At this time, it is impossible to use the grouped PEI to monitor a paging message. That is, the UE may only return to the legacy monitoring mode (i.e., no PEI monitoring is required).

In this way, when the UE obtains the capability of the base station and finds that the type of the paging PEI sent by the base station does not match its own capability, the UE does not need to monitor the PEI, which simplifies the process and saves power.

Specifically, for a base station that supports the CN-assign grouping mode + UE_ID grouping mode (fourth type of base station capability),

UE that supports the UE_ID grouping or the CN grouping will use the grouped PEI to monitor a paging message; and there is a need to check whether a group to which the UE belongs is awakened.

Furthermore, for only a UE to which the core network device assigns a subgroup ID, there is a need to check whether a group to which the UE is awakened; if the UE to which the core network device does not assign a subgroup ID also has the capability 2, there is a need to monitor the PEI; otherwise, there is no need to monitor the PEI.

The embodiment of the disclosure further provides an apparatus for information transmission, as illustrated in FIG. 11, which is applied to a base station in cellular mobile wireless communication. The apparatus 100 includes a first receiving module 110.

The first receiving module 110 is configured to receive first capability indication information. The first capability indication information indicates whether a UE supports a PEI.

In an embodiment, the first capability indication information indicates at least one of: whether the UE supports a first type of PEI; or whether the UE supports a second type of PEI, in which the first type of PEI is different from the second type of PEI.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

In an embodiment, the apparatus further includes at least one of: a first determination module 120 and a second determination module 130.

The first determination module 120 is configured to determine that the UE supports the first type of PEI in response to first capability indication information indicating that the UE supports the second type of PEI.

The second determination module 130 is configured to determine that the UE does not support the first type of PEI in response to the first capability indication information indicating that the UE does not support a second type of PEI at least corresponding to a first type of paging grouping mode and a second type of PEI at least corresponding to a second type of paging grouping mode.

In an embodiment, the first receiving module 110 is specifically configured to perform at least one of: receiving from the UE, the first capability indication information indicating whether the UE supports the first type of PEI; receiving from the UE, the first capability indication information indicating whether the UE supports a second type of PEI at least corresponding to a second type of paging grouping mode; receiving from a core network device, the first capability indication information; or receiving from a counterpart base station, the first capability indication information.

In an embodiment, the first receiving module 110 is specifically configured to: in response to receiving grouping information of a first type of paging grouping mode of the UE from the core network device, determine that the UE supports a second type of PEI at least corresponding to the first type of paging grouping mode.

In an embodiment, the apparatus further includes a first sending module configured to perform at least one of: sending to a counterpart base station, second capability indication information indicating whether the UE supports the first type of PEI; sending to the counterpart base station, second capability indication information indicating whether the UE supports the second type of PEI; sending to a core network device, second capability indication information indicating whether the UE supports the first type of PEI; or sending to the core network device, second capability indication information indicating whether the UE supports a second type of PE at least corresponding to a second type of paging grouping mode.

In an embodiment, the apparatus further includes a second sending module 150, configured to send third capability indication information to the UE. The third capability indication information is configured for the UE to determine a PEI that a base station is capable of sending.

In an embodiment, the third capability indication information is configured for the UE to determine at least one of the following that the base station is capable of sending: the first type of PEI; a second type of PEI corresponding to a first type of paging grouping mode, in which the first type of PEI is different from the second type of PEI; a second type of PEI corresponding to a second type of paging grouping mode; or a second type of PEI corresponding to the first type of paging grouping mode and the second type of paging grouping mode.

The embodiment of the disclosure further provides an apparatus for information transmission, as illustrated in FIG. 12, which is applied to a UE in cellular mobile wireless communication. The apparatus 200 includes a third sending module 210.

The third sending module 210 is configured to send first capability indication information. The first capability indication information indicates whether the UE supports a PEI.

In an embodiment, the first capability indication information indicates at least one of: whether the UE supports a first type of PEI; or whether the UE supports a second type of PEI, in which the first type of PEI is different from the second type of PEI.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

In an embodiment, the third sending module is specifically configured to perform at least one of: sending to a base station, the first capability indication information indicating whether the UE supports the first type of PEI; sending to the base station, the first capability indication information indicating whether the UE supports a second type of PEI at least corresponding to a second type of paging grouping mode; sending to a core network device, the first capability indication information indicating whether the UE supports a second type of PEI at least corresponding to a first type of paging grouping mode.

In an embodiment, the apparatus further includes a second receiving module 220, configured to receive second capability indication information from a base station. The second capability indication information is configured for the UE to determine a PEI that the base station is capable of sending.

In an embodiment, the second capability indication information is configured for the UE to determine at least one of the following that the base station is capable of sending: the first type of PEI; a second type of PEI corresponding to a first type of paging grouping mode, in which the first type of PEI is different from the second type of PEI; a second type of PEI corresponding to a second type of paging grouping mode; or a second type of PEI corresponding to the first type of paging grouping mode and the second type of paging grouping mode.

In an embodiment, the apparatus further includes a third determination module 230, configured to determine whether to monitor the PEI sent by the base station according to the PEI supported by the UE.

In an embodiment, the third determination module 230 is specifically configured to perform at least one of: in response to determining that the UE supports the PEI that the base station is capable of sending, determining to monitor the PEI sent by the base station; or in response to determining that the UE does not support the PEI that the base station is capable of sending, determining not to monitor the PEI sent by the base station.

In an embodiment, the third determination module 230 is specifically configured to perform at least one of: in response to the base station being capable of sending the first type of PEI and the UE supporting the first type of PEI, determining to monitor the PEI sent by the base station; or in response to the base station being capable of sending the second type of PEI and the UE supporting the second type of PEI, determining to monitor the PEI sent by the base station.

In an embodiment, the third determination module 230 is specifically configured to perform at least one of: in response to the base station being capable of sending the first type of PEI and the UE supporting the first type of PEI and the second type of PEI, determining to monitor the PEI sent by the base station; or in response to the base station being capable of sending the first type of PEI and the UE supporting the second type of PEI, determining to monitor the PEI sent by the base station.

In an embodiment, the third determination module 230 is specifically configured to perform at least one of: in response to the base station being capable of sending a second type of PEI at least corresponding to a first type of paging grouping mode, and the UE supporting the second type of PEI at least corresponding to the first type of paging grouping mode, determining to monitor the PEI sent by the base station; or in response to the base station being capable of sending a second type of PEI at least corresponding to a second type of paging grouping mode, and the UE supporting the second type of PEI at least corresponding to the second type of paging grouping mode, determining to monitor the PEI sent by the base station.

In an embodiment, the third determination module 230 is specifically configured to: in response to the base station being capable of sending the second type of PEI at least corresponding to the first type of paging grouping mode, and the UE having grouping information of the first type of paging grouping mode, determining to monitor the PEI sent by the base station.

The embodiment of the disclosure further provides an apparatus for information transmission, as illustrated in FIG. 13, which is applied to a core network device in cellular mobile wireless communication. The apparatus 300 includes a third receiving module 310.

The third receiving module 310 is configured to receive first capability indication information. The first capability indication information indicates whether a UE supports a PEI.

In an embodiment, the first capability indication information indicates at least one of: whether the UE supports a first type of PEI; or whether the UE supports a second type of PEI, in which the first type of PEI is different from the second type of PEI.

In an embodiment, whether the UE supports the second type of PEI includes at least one of: whether the UE supports a second type of PEI at least corresponding to a first type of paging grouping mode; or whether the UE supports a second type of PEI at least corresponding to a second type of paging grouping mode.

In an embodiment, the first type of paging grouping mode includes a paging grouping mode where a paging group is determined by a core network device; and the second type of paging grouping mode includes a paging grouping mode where a paging group is determined based on a UE identifier.

In an embodiment, the third receiving module 310 is configured to perform at least one of: receiving from the UE, the first capability indication information indicating whether the UE supports a second type of PEI at least corresponding to a first type of paging grouping mode; receiving from a base station, the first capability indication information indicating whether the UE supports the first type of PEI; or receiving from a base station, the first capability indication information indicating whether the UE supports a second type of PE at least corresponding to a second type of paging grouping mode.

In an embodiment, the apparatus further includes a fourth sending module 320 configured to perform at least one of: sending to the base station, second UE capability indication information indicating whether the UE supports the first type of PEI; or sending to the base station, second UE capability indication information indicating whether the UE supports the second type of PEI.

In an exemplary embodiment, the first receiving module 110, the first determination module 120, the second determination module 130, the first sending module 140, the second sending module 150, the third sending module 210, the second receiving module 220, the third determination module 230, the third receiving module 310 and the fourth sending module 320 etc. may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field-programmable gate arrays (FPGAs), general-purpose processors, controllers, micro controller units (MCUs), microprocessors, or other electronic components to perform the aforementioned method.

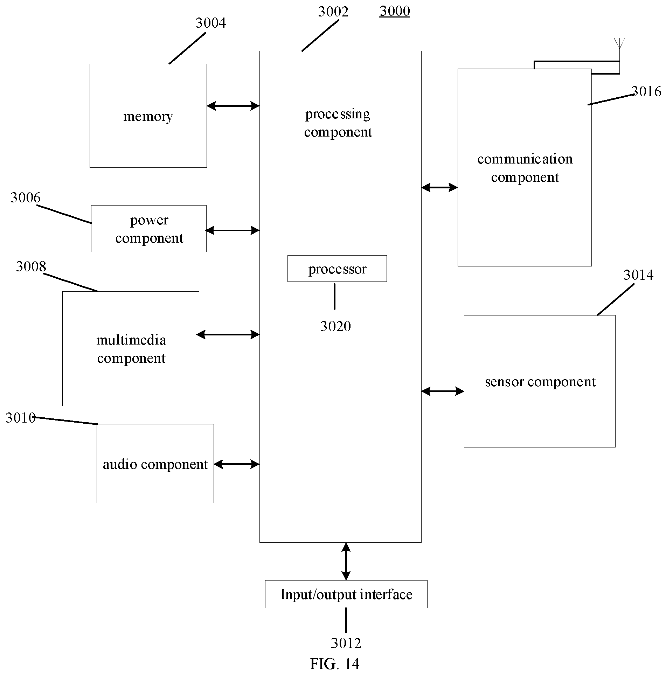

FIG. 14 is a block diagram illustrating a device 3000 for information transmission according to an exemplary embodiment. For example, the device 3000 may be a mobile phone, a computer, a digital broadcast terminal, a messaging device, a game console, a tablet device, a medical device, a fitness device, a personal digital assistant, and the like.

Referring to FIG. 14, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 generally controls overall operations of the device 3000, such as those associated with display, telephone calls, data communications, camera operations, and recording operations. The processing component 3002 may include one or more processors 3020 to execute instructions to perform all or some of the steps of the methods described above. Moreover, the processing component 3002 may include one or more modules that facilitate interactions between the processing component 3002 and other components. For example, the processing component 3002 may include a multimedia module to facilitate interactions between the multimedia component 3008 and the processing component 3002.

The memory 3004 is configured to store various types of data to support operations of the device 3000. Examples of such data include instructions for any application or method operating on the device 3000, contact data, phonebook data, messages, pictures, videos, and the like. The memory 3004 may be implemented by any type of volatile or nonvolatile storage device or their combination, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 3008 includes a front-facing camera and/or a rear-facing camera. When the device 3000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 3010 is configured to output and/or input audio signals. For example, the audio component 3010 includes a microphone (MIC) that is configured to receive external audio signals when the device 3000 is in an operating mode, such as a call mode, a recording mode, and a voice recognition mode. The received audio signal may be further stored in the memory 3004 or transmitted via the communication component 3016. In some embodiments, the audio component 3010 also includes a speaker for outputting audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide state assessments of various aspects of the device 3000. For instance, the sensor component 3014 may detect an open/closed state of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a complementary metal oxide semiconductor (CMOS) or a charge-coupled device (CCD) image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as WiFi, 2G, or 3G, or their combination. In an exemplary embodiment, the communication component 3016 receives a broadcast signal or broadcast associated information from an external broadcast management system via a broadcast channel. In an exemplary embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In exemplary embodiments, the device 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer readable storage medium including instructions, such as included in the memory 3004, executable by the processor 3020 in the device 3000, for performing the above method. For example, the non-transitory computer readable storage medium may be a ROM, a random access memory (RAM), a CD-ROM, a magnetic tape, a floppy disc, an optical data storage device, and the like.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

**Claims**

1. A method for information transmission, performed by a base station, the method comprising:
   receiving first capability indication information, wherein the first capability indication information indicates whether a user equipment (UE) supports a paging early indication (PEI).

2. The method according to claim 1, wherein the first capability indication information indicates at least one of:

   whether the UE supports a first type of PEI; or
   whether the UE supports a second type of PEI, wherein the first type of PEI is different from the second type of PEI.

3. The method according to claim 2, wherein whether the UE supports the second type of PEI comprises at least one of:

whether the UE supports a second type of PEI at least corresponding to a first type of paging grouping mode; or
whether the UE supports a second type of PEI at least corresponding to a second type of paging grouping mode.

4. The method according to claim 3, wherein

the first type of paging grouping mode comprises a paging grouping mode where a paging group is determined by a core network device; and
the second type of paging grouping mode comprises a paging grouping mode where a paging group is determined based on a UE identifier.

5. The method according to claim 2, further comprising at least one of:

in response to the first capability indication information indicating that the UE supports the second type of PEI, determining that the UE supports the first type of PEI; or
in response to the first capability indication information indicating that the UE does not support a second type of PEI at least corresponding to a first type of paging grouping mode and a second type of PEI at least corresponding to a second type of paging grouping mode, determining that the UE does not support the first type of PEI.

6. The method according to claim 2, wherein receiving the first capability indication information comprises at least one of:

receiving from the UE, the first capability indication information indicating whether the UE supports the first type of PEI;
receiving from the UE, the first capability indication information indicating whether the UE supports a second type of PEI at least corresponding to a second type of paging grouping mode;
receiving from a core network device, the first capability indication information; or
receiving from a counterpart base station, the first capability indication information.

7. The method according to claim 6, wherein receiving from the core network device, the first capability indication information, comprises:
in response to receiving grouping information of a first type of paging grouping mode of the UE from the core network device, determining that the UE supports a second type of PEI at least corresponding to the first type of paging grouping mode.

8. The method according to claim 2, further comprising at least one of:

sending to a counterpart base station, second capability indication information indicating whether the UE supports the first type of PEI;
sending to the counterpart base station, second capability indication information indicating whether the UE supports the second type of PEI;
sending to a core network device, second capability indication information indicating whether the UE supports the first type of PEI; or
sending to the core network device, second capability indication information indicating whether the UE supports a second type of PE at least corresponding to a second type of paging grouping mode.

9. The method according to any one of claims 1 to 8, further comprising:
sending third capability indication information to the UE, wherein the third capability indication information is configured for the UE to determine a PEI that the base station is capable of sending.

10. The method according to claim 9, wherein the third capability indication information is configured for the UE to determine at least one of the following that the base station is capable of sending:

the first type of PEI;
a second type of PEI corresponding to a first type of paging grouping mode, wherein the first type of PEI is different from the second type of PEI;
a second type of PEI corresponding to a second type of paging grouping mode; or
a second type of PEI corresponding to the first type of paging grouping mode and the second type of paging grouping mode.

11. A method for information transmission, performed by a user equipment (UE), the method comprising:
sending first capability indication information, wherein the first capability indication information indicates whether the UE supports a paging early indication (PEI).

12. The method according to claim 11, wherein the first capability indication information indicates at least one of:

whether the UE supports a first type of PEI; or
whether the UE supports a second type of PEI, wherein the first type of PEI is different from the second type of PEI.

13. The method according to claim 12, wherein whether the UE supports the second type of PEI comprises at least one of:

whether the UE supports a second type of PEI at least corresponding to a first type of paging grouping mode; or
whether the UE supports a second type of PEI at least corresponding to a second type of paging grouping mode.

14. The method according to claim 13, wherein

the first type of paging grouping mode comprises a paging grouping mode where a paging group is determined by a core network device;
the second type of paging grouping mode comprises a paging grouping mode where a paging group is determined based on a UE identifier.

15. The method according to claim 12, wherein sending the first capability indication information comprises at least one of:

sending to a base station, the first capability indication information indicating whether the UE supports the first type of PEI;
sending to the base station, the first capability indication information indicating whether the UE supports a second type of PEI at least corresponding to a second type of paging grouping mode; or
sending to a core network device, the first capability indication information indicating whether the UE supports a second type of PEI at least corresponding to a first type of paging grouping mode.

16. The method according to any one of claims 11 to 15, further comprising:
receiving second capability indication information from a base station, wherein the second capability indication information is configured for the UE to determine a PEI that the base station is capable of sending.

17. The method according to claim 16, wherein the second capability indication information is configured for the UE to determine at least one of the following that the base station is capable of sending:

the first type of PEI;
a second type of PEI corresponding to a first type of paging grouping mode, wherein the first type of PEI is different from the second type of PEI;
a second type of PEI corresponding to a second type of paging grouping mode; or
a second type of PEI corresponding to the first type of paging grouping mode and the second type of paging grouping mode.

18. The method according to claim 16, further comprising:
determining whether to monitor the PEI sent by the base station according to the PEI supported by the UE.

19. The method according to claim 18, wherein determining whether to monitor the PEI sent by the base station according to the PEI supported by the UE, comprises at least one of:

in response to determining that the UE supports the PEI that the base station is capable of sending, monitoring the PEI sent by the base station; or
in response to determining that the UE does not support the PEI that the base station is capable of sending, not monitoring the PEI sent by the base station.

20. The method according to claim 19, wherein in response to determining that the UE supports the PEI that the base station is capable of sending, monitoring the PEI sent by the base station comprises at least one of:

in response to the base station being capable of sending the first type of PEI and the UE supporting the first type of PEI, monitoring the PEI sent by the base station; or

in response to the base station being capable of sending the second type of PEI and the UE supporting the second type of PEI, monitoring the PEI sent by the base station.

21. The method according to claim 20, wherein in response to the base station being capable of sending the first type of PEI and the UE supporting the first type of PEI, monitoring the PEI sent by the base station comprises at least one of:

in response to the base station being capable of sending the first type of PEI and the UE supporting the first type of PEI and the second type of PEI, monitoring the PEI sent by the base station; or

in response to the base station being capable of sending the first type of PEI and the UE supporting the second type of PEI, monitoring the PEI sent by the base station.

22. The method according to claim 20, wherein in response to the base station being capable of sending the second type of PEI and the UE supporting the second type of PEI, monitoring the PEI sent by the base station comprises at least one of:

in response to the base station being capable of sending a second type of PEI at least corresponding to a first type of paging grouping mode, and the UE supporting the second type of PEI at least corresponding to the first type of paging grouping mode, monitoring the PEI sent by the base station; or

in response to the base station being capable of sending a second type of PEI at least corresponding to a second type of paging grouping mode, and the UE supporting the second type of PEI at least corresponding to the second type of paging grouping mode, monitoring the PEI sent by the base station.

23. The method according to claim 22, wherein in response to the base station being capable of sending the second type of PEI at least corresponding to the first type of paging grouping mode, and the UE supporting the second type of PEI at least corresponding to the first type of paging grouping mode, monitoring the PEI sent by the base station, comprises:
in response to the base station being capable of sending the second type of PEI at least corresponding to the first type of paging grouping mode, and the UE having grouping information of the first type of paging grouping mode, monitoring the PEI sent by the base station.

24. A method for information transmission, performed by a core network device, the method comprising:
receiving first capability indication information, wherein the first capability indication information indicates whether a user equipment (UE) supports a paging early indication (PEI).

25. The method according to claim 24, wherein the first capability indication information indicates at least one of:

whether the UE supports a first type of PEI; or
whether the UE supports a second type of PEI, wherein the first type of PEI is different from the second type of PEI.

26. The method according to claim 25, wherein whether the UE supports the second type of PEI comprises at least one of:

whether the UE supports a second type of PEI at least corresponding to a first type of paging grouping mode; or
whether the UE supports a second type of PEI at least corresponding to a second type of paging grouping mode.

27. The method according to claim 26, wherein

the first type of paging grouping mode comprises a paging grouping mode where a paging group is determined by the core network device; and
the second type of paging grouping mode comprises a paging grouping mode where a paging group is determined based on a UE identifier.

28. The method according to claim 25, wherein receiving the first capability indication information comprises at least one of:

receiving from the UE, the first capability indication information indicating whether the UE supports a second type of PEI at least corresponding to a first type of paging grouping mode;

receiving from a base station, the first capability indication information indicating whether the UE supports the first type of PEI; or

receiving from a base station, the first capability indication information indicating whether the UE supports a second type of PE at least corresponding to a second type of paging grouping mode.

29. The method according to any one of claims 25 to 28, further comprising at least one of:

sending to the base station, second UE capability indication information indicating whether the UE supports the first type of PEI; or

sending to the base station, second UE capability indication information indicating whether the UE supports the second type of PEI.

30. An apparatus for information transmission, comprising:

a first receiving module, configured to receive first capability indication information, wherein the first capability indication information indicates whether a user equipment (UE) supports a paging early indication (PEI).

31. The apparatus according to claim 30, wherein the first capability indication information indicates at least one of:

whether the UE supports a first type of PEI; or

whether the UE supports a second type of PEI, wherein the first type of PEI is different from the second type of PEI.

32. The apparatus according to claim 31, wherein whether the UE supports the second type of PEI comprises at least one of:

whether the UE supports a second type of PEI at least corresponding to a first type of paging grouping mode; or

whether the UE supports a second type of PEI at least corresponding to a second type of paging grouping mode.

33. The apparatus according to claim 32, wherein

the first type of paging grouping mode comprises a paging grouping mode where a paging group is determined by a core network device; and

the second type of paging grouping mode comprises a paging grouping mode where a paging group is determined based on a UE identifier.

34. The apparatus according to claim 31, further comprising at least one of:

a first determination module, configured to determine that the UE supports the first type of PEI in response to first capability indication information indicating that the UE supports the second type of PEI;

a second determination module, configured to determine that the UE does not support the first type of PEI in response to the first capability indication information indicating that the UE does not support a second type of PEI at least corresponding to a first type of paging grouping mode and a second type of PEI at least corresponding to a second type of paging grouping mode.

35. The apparatus according to claim 31, wherein the first receiving module is specifically configured to perform at least one of:

receiving from the UE, the first capability indication information indicating whether the UE supports the first type of PEI;

receiving from the UE, the first capability indication information indicating whether the UE supports a second type of PEI at least corresponding to a second type of paging grouping mode;

receiving from a core network device, the first capability indication information; or

receiving from a counterpart base station, the first capability indication information.

36. The apparatus according to claim 35, wherein the first receiving module is specifically configured to:

in response to receiving grouping information of a first type of paging grouping mode of the UE from the core network device, determine that the UE supports a second type of PEI at least corresponding to the first type of paging grouping mode.

37. The apparatus according to claim 31, further comprising a first sending module configured to perform at least one of:

sending to a counterpart base station, second capability indication information indicating whether the UE supports the first type of PEI;

sending to the counterpart base station, second capability indication information indicating whether the UE supports the second type of PEI;

sending to a core network device, second capability indication information indicating whether the UE supports the first type of PEI; or

sending to the core network device, second capability indication information indicating whether the UE supports a second type of PE at least corresponding to a second type of paging grouping mode.

38. The apparatus according to any one of claims 31 to 37, further comprising:

a second sending module, configured to send third capability indication information to the UE, wherein the third capability indication information is configured for the UE to determine a PEI that a base station is capable of sending.

39. The apparatus according to claim 38, wherein the third capability indication information is configured for the UE to determine at least one of the following that the base station is capable of sending:

the first type of PEI;

a second type of PEI corresponding to a first type of paging grouping mode, wherein the first type of PEI is different from the second type of PEI;

a second type of PEI corresponding to a second type of paging grouping mode; or

a second type of PEI corresponding to the first type of paging grouping mode and the second type of paging grouping mode.

40. An apparatus for information transmission, comprising:

a third sending module, configured to send first capability indication information, wherein the first capability indication information indicates whether the UE supports a paging early indication (PEI).

41. The apparatus according to claim 40, wherein the first capability indication information indicates at least one of:

whether the UE supports a first type of PEI; or

whether the UE supports a second type of PEI, wherein the first type of PEI is different from the second type of PEI.

42. The apparatus according to claim 41, wherein whether the UE supports the second type of PEI comprises at least one of:

whether the UE supports a second type of PEI at least corresponding to a first type of paging grouping mode; or

whether the UE supports a second type of PEI at least corresponding to a second type of paging grouping mode.

43. The apparatus according to claim 42, wherein

the first type of paging grouping mode comprises a paging grouping mode where a paging group is determined by a core network device;

the second type of paging grouping mode comprises a paging grouping mode where a paging group is determined based on a UE identifier.

44. The apparatus according to claim 41, wherein the third sending module is specifically configured to perform at least one of:

sending to a base station, the first capability indication information indicating whether the UE supports the first type of PEI;

sending to the base station, the first capability indication information indicating whether the UE supports a second type of PEI at least corresponding to a second type of paging grouping mode;

sending to a core network device, the first capability indication information indicating whether the UE supports a second type of PEI at least corresponding to a first type of paging grouping mode.

45. The apparatus according to claim 41, further comprising:

a second receiving module, configured to receive second capability indication information from a base station, wherein the second capability indication information is configured for the UE to determine a PEI that the base station is capable of sending.

46. The apparatus according to claim 45, wherein the second capability indication information is configured for the UE to determine at least one of the following that the base station is capable of sending:

the first type of PEI;
a second type of PEI corresponding to a first type of paging grouping mode, wherein the first type of PEI is different from the second type of PEI;
a second type of PEI corresponding to a second type of paging grouping mode; or
a second type of PEI corresponding to the first type of paging grouping mode and the second type of paging grouping mode.

47. The apparatus according to claim 45, further comprising:
a third determination module, configured to determine whether to monitor the PEI sent by the base station according to the PEI supported by the UE.

48. The apparatus according to claim 47, wherein the third determination module is specifically configured to perform at least one of:

in response to determining that the UE supports the PEI that the base station is capable of sending, determining to monitor the PEI sent by the base station; or
in response to determining that the UE does not support the PEI that the base station is capable of sending, determining not to monitor the PEI sent by the base station.

49. The apparatus according to claim 48, wherein the third determination module is specifically configured to perform at least one of:

in response to the base station being capable of sending the first type of PEI and the UE supporting the first type of PEI, determining to monitor the PEI sent by the base station; or
in response to the base station being capable of sending the second type of PEI and the UE supporting the second type of PEI, determining to monitor the PEI sent by the base station.

50. The apparatus according to claim 49, wherein the third determination module is specifically configured to perform at least one of:

in response to the base station being capable of sending the first type of PEI and the UE supporting the first type of PEI and the second type of PEI, determining to monitor the PEI sent by the base station; or
in response to the base station being capable of sending the first type of PEI and the UE supporting the second type of PEI, determining to monitor the PEI sent by the base station.

51. The apparatus according to claim 49, wherein the third determination module is specifically configured to perform at least one of:

in response to the base station being capable of sending a second type of PEI at least corresponding to a first type of paging grouping mode, and the UE supporting the second type of PEI at least corresponding to the first type of paging grouping mode, determining to monitor the PEI sent by the base station; or
in response to the base station being capable of sending a second type of PEI at least corresponding to a second type of paging grouping mode, and the UE supporting the second type of PEI at least corresponding to the second type of paging grouping mode, determining to monitor the PEI sent by the base station.

52. The apparatus according to claim 51, wherein the third determination module is specifically configured to:
in response to the base station being capable of sending the second type of PEI at least corresponding to the first type of paging grouping mode, and the UE having grouping information of the first type of paging grouping mode, determining to monitor the PEI sent by the base station.

53. An apparatus for information transmission, comprising:

a third receiving module, configured to receive first capability indication information, wherein the first capability indication information indicates whether a user equipment (UE) supports a paging early indication (PEI).

54. The apparatus according to claim 53, wherein the first capability indication information indicates at least one of:

whether the UE supports a first type of PEI; or
whether the UE supports a second type of PEI, wherein the first type of PEI is different from the second type of PEI.

55. The apparatus according to claim 54, wherein whether the UE supports the second type of PEI comprises at least one of:

whether the UE supports a second type of PEI at least corresponding to a first type of paging grouping mode; or
whether the UE supports a second type of PEI at least corresponding to a second type of paging grouping mode.

56. The apparatus according to claim 55, wherein

the first type of paging grouping mode comprises a paging grouping mode where a paging group is determined by the core network device; and
the second type of paging grouping mode comprises a paging grouping mode where a paging group is determined based on a UE identifier.

57. The apparatus according to claim 54, wherein the third receiving module is configured to perform at least one of:

receiving from the UE, the first capability indication information indicating whether the UE supports a second type of PEI at least corresponding to a first type of paging grouping mode;
receiving from a base station, the first capability indication information indicating whether the UE supports the first type of PEI; or
receiving from a base station, the first capability indication information indicating whether the UE supports a second type of PE at least corresponding to a second type of paging grouping mode.

58. The apparatus according to any one of claims 54 to 57, further comprising a fourth sending module configured to perform at least one of:

sending to the base station, second UE capability indication information indicating whether the UE supports the first type of PEI; or
sending to the base station, second UE capability indication information indicating whether the UE supports the second type of PEI.

59. A communication device, comprising: a processor, and a memory storing an executable program capable of being run by the processor which, when executed by the processor, implements steps in the method for information transmission according to any one of claims 1 to 10, claims 11 to 23, or claims 24 to 29.

60. A storage medium having an executable program stored thereon, wherein when the executable program is executed by a processor, steps in the method for information transmission according to any one of claims 1 to 10, claims 11 to 23, or claims 24 to 29 are implemented.

FIG. 1

| UE/counterpart base station/core network device | | base station |
|---|---|---|

data communication

201: receiving first capability indication information, wherein the first capability indication information indicates whether a user equipment (UE) supports a paging early indication (PEI)

FIG. 2

UE/counterpart base station/core network device

base station

data communication

301a: in response to the first capability indication information indicating that the UE supports the second type of PEI, determining that the UE supports the first type of PEI
301b: in response to the first capability indication information indicating that the UE does not support a second type of PEI at least corresponding to a first type of paging grouping mode and a second type of PEI at least corresponding to a second type of paging grouping mode, determining that the UE does not support the first type of PEI

FIG. 3

counterpart base station

base station

core network device

401a: sending to a counterpart base station, second capability indication information indicating whether the UE supports the first type of PEI

401b: sending to the counterpart base station, second capability indication information indicating whether the UE supports the second type of PEI

401c: sending to a core network device, second capability indication information indicating whether the UE supports the first type of PEI

401d: sending to the core network device, second capability indication information indicating whether the UE supports a second type of PEI at least corresponding to a second type of paging grouping mode

FIG. 4

UE

base station

data communication

501: sending third capability indication information to the UE, wherein the third capability indication information is configured for the UE to determine a PEI that the base station is capable of sending

FIG. 5

UE | base station/core network device

data communication

601: sending first capability indication information, wherein the first capability indication information indicates whether the UE supports a paging earlier indication (PEI)

FIG. 6

UE | base station

data communication

701: receiving second capability indication information from a base station, wherein the second capability indication information is configured for the UE to determine a PEI that the base station is capable of sending

FIG. 7

UE | base station

data communication

801: determining whether to monitor the PEI sent by the base station according to the PEI supported by the UE

FIG. 8

UE/ base station | core network device

data communication

901: receiving first capability indication information, wherein the first capability indication information indicates whether a user equipment (UE) supports a paging early indication (PEI)

FIG. 9

base station          core network device

data communication

1001a: sending to the base station, second UE capability
indication information indicating whether the UE
supports the first type of PEI;

1001b: sending to the base station, second UE capability
indication information indicating whether the UE
supports the second type of PEI

FIG. 10

apparatus for information transmission 100

first receiving module 110

first determination module 120

second determination module 130

first sending module 140

second sending module 150

FIG. 11

apparatus for information transmission 200

third sending module 210

second receiving module 220

third determination module 230

FIG. 12

apparatus for information transmission 300

third receiving module 310

fourth sending module 320

FIG. 13

FIG. 14

## INTERNATIONAL SEARCH REPORT

| International application No. |
|---|
| **PCT/CN2022/071124** |

### A. CLASSIFICATION OF SUBJECT MATTER

H04W 68/00(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

3GPP, CNTXT, ENTXTC: 寻呼, 提前, PEI, 唤醒, PO, 寻呼时机, 分组, 公共; paging occasion, paging earlier indication, groups

### C. DOCUMENTS CONSIDERED TO BE RELEVANT

| Category* | Citation of document, with indication, where appropriate, of the relevant passages | Relevant to claim No. |
|---|---|---|
| X | CN 113170282 A (BEIJING XIAOMI MOBILE SOFTWARE CO., LTD.) 23 July 2021 (2021-07-23)<br>    description, paragraphs 98-178 | 1, 11, 24, 30,<br>40, 53, 59, 60 |
| A | CN 112740764 A (APPLE INC.) 30 April 2021 (2021-04-30)<br>    entire document | 1-60 |
| A | CN 113056951 A (BEIJING XIAOMI MOBILE SOFTWARE CO., LTD.) 29 June 2021 (2021-06-29)<br>    entire document | 1-60 |
| A | CN 113163476 A (ZTE CORP.) 23 July 2021 (2021-07-23)<br>    entire document | 1-60 |
| A | CN 110771222 A (BEIJING XIAOMI MOBILE SOFTWARE CO., LTD.) 07 February 2020 (2020-02-07)<br>    entire document | 1-60 |

☐ Further documents are listed in the continuation of Box C.        ☑ See patent family annex.

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 May 2022** | **27 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/071124**

| Patent document cited in search report | | | Publication date (day/month/year) | Patent family member(s) | | | Publication date (day/month/year) |
|---|---|---|---|---|---|---|---|
| CN | 113170282 | A | 23 July 2021 | None | | | |
| CN | 112740764 | A | 30 April 2021 | None | | | |
| CN | 113056951 | A | 29 June 2021 | None | | | |
| CN | 113163476 | A | 23 July 2021 | None | | | |
| CN | 110771222 | A | 07 February 2020 | WO | 2021030974 | A1 | 25 February 2021 |

Form PCT/ISA/210 (patent family annex) (January 2015)